(19) Europäisches Patentamt
European Patent Office
Office européen des brevets

(11) **EP 2 641 134 B1**

(12) **FASCICULE DE BREVET EUROPEEN**

(45) Date de publication et mention de la délivrance du brevet:
**01.06.2016 Bulletin 2016/22**

(21) Numéro de dépôt: **11794820.8**

(22) Date de dépôt: **16.11.2011**

(51) Int Cl.:
*F16F 15/00* *(2006.01)*    *G05D 19/02* *(2006.01)*
*G05B 13/02* *(2006.01)*

(86) Numéro de dépôt international:
**PCT/FR2011/052656**

(87) Numéro de publication internationale:
**WO 2012/066233 (24.05.2012 Gazette 2012/21)**

(54) **PROCÉDÉ ET DISPOSITIF DE CONTROLE LE ACTIF DE VIBRATIONS MÉCANIQUES PAR MISE EN OEUVRE D'UNE LOI DE CONTROLE CONSTITUÉE D'UN CORRECTEUR CENTRAL ET D'UN PARAMÈTRE DE YOULA**

VERFAHREN UND VORRICHTUNG ZUR AKTIVEN STEUERUNG VON MECHANISCHEN SCHWINGUNGEN MITTELS IMPLEMENTIERUNG EINER STEUERUNG AUS EINEM ZENTRALEN KORREKTOR UND EINEM YOULA-PARAMETER

METHOD AND DEVICE FOR ACTIVE CONTROL OF MECHANICAL VIBRATIONS BY IMPLEMENTATION OF A CONTROLLER CONSISTING OF A CENTRAL CORRECTOR AND A YOULA PARAMETER

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **16.11.2010 FR 1059419**

(43) Date de publication de la demande:
**25.09.2013 Bulletin 2013/39**

(73) Titulaire: **IXBLUE**
**78100 Saint-Germain-en-Laye (FR)**

(72) Inventeur: **VAU, Bernard**
**F-94100 Saint Maur Des Fosses (FR)**

(74) Mandataire: **Coralis Harle**
**14-16 Rue Ballu**
**75009 Paris (FR)**

(56) Documents cités:
• **Sophie Glévarec (Ponchaud), Bernard Vau: "Atténuation des ondulations de couple sur simulateurs de mouvements", Conférence Mécatronique, Innovaxiom, SupMéca, Saint-Ouen , 15 décembre 2009 (2009-12-15), pages 1-12, XP002647612, Extrait de l'Internet: URL:http://www.innovaxiom.com/index.php?option=com_docman&task=doc_download&gid=275 [extrait le 2011-07-04]**
• **"La mécatronique innovante", , 16 décembre 2009 (2009-12-16), XP002647591, Extrait de l'Internet: URL:http://www.innovaxiom.com/index2.php?option=com_docman&task=doc_view&gid=284&Ite mid=99999999 [extrait le 2011-07-04]**

• I.O. LANDAU, A. COSTANTINESCU, D. REY: "Adaptive narrow band disturbance rejection applied to an active suspension - an internal model principle approach", AUTOMATICA, 24 janvier 2005 (2005-01-24), pages 563-574, XP002647858, DOI: 10.1016/j.automatica.2004.08.022 Extrait de l'Internet: URL:http://www.sciencedirect.com/science?_ob=MImg&_imagekey=B6V21-4FB3X55-3-91&_cdi= 5689&_user=987766&_pii=S0005109804003358&_origin=&_coverDate=04%2F01%2F2005&_sk=9995 89995&view=c&wchp=dGLbVzW-zSkzV&md5=31bbf9 135a89708149de9fabdbb44500&ie=/sdarticle.pdf [extrait le 2011-07-05] cité dans la demande

**EP 2 641 134 B1**

**Description**

La présente invention concerne un procédé et dispositif de contrôle actif de vibrations mécaniques par mise en oeuvre d'une loi de contrôle constituée d'un correcteur central et d'un paramètre de Youla.

Il existe de nombreux cas industriels d'utilisation de machines tournantes. Ces machines produisent toujours des vibrations qui sont transmises aux structures matérielles auxquelles elles sont fixées par l'intermédiaires de supports de fixation liant la machine tournante à sa structure matérielle. Le caractère tournant des machines précitées conduit à ce que le spectre des vibrations transmises présente des pics à des fréquences proportionnelles à la vitesse de rotation de l'axe tournant. Ces vibrations sont souvent engendrées par le balourd de l'axe tournant, c'est-à-dire un défaut d'équilibrage de l'axe tournant. Dans le domaine fréquentiel, les pics observés dans le spectre des vibrations transmises ont des fréquences en Hertz égales à la vitesse de rotation de l'axe en tour/seconde ou à ses multiples (harmoniques).

La réduction des vibrations a pendant longtemps été obtenue par l'application de méthodes passives. C'est pour cela, qu'en général, la machine tournante est fixée à la structure matérielle par l'intermédiaire d'un support comportant un/des plots élastiques qui ont un effet d'amortissement passif. Néanmoins, pour des raisons de solidité de la fixation, il n'est pas possible de rendre très souple, donc très amortissant ces plots, ce qui entraîne nécessairement une limitation de l'isolation produite par ces plots souvent construits en élastomère.

Le document « Atténuation des ondulations de couple sur simulateurs de mouvements » de Sophie Glévarec (Ponchaud) et Bernard Vau, Conférence Mécatronique, SupMéca, Saint-Ouen, 15 décembre 2009, présente un moyen de contrôler des vibrations mécaniques.

La présente invention décrit une application particulière de contrôle actif dans le cadre de l'isolation vibratoire des machines tournantes, la vitesse de rotation de l'axe de la machine étant connue ou pouvant être déterminée et pouvant varier.

Un exemple de mise en oeuvre typique est celui de l'isolation d'une carlingue d'avion par rapport aux vibrations générées par les balourds des moteurs. On peut cependant mettre en oeuvre l'invention dans tout autre domaine dans lequel une machine tournante crée des perturbations mécaniques vibratoires pouvant être transmises à une structure matérielle à laquelle est reliée la machine tournante et que l'on souhaite atténuer ou supprimer.

Il existe deux grands schémas de principe de structures de contrôle actif de systèmes matériels.

Premièrement, la structure à précompensation (« feedforward »). Cette structure nécessite un actionneur, un capteur d'erreur au niveau duquel on cherche à annuler la vibration, un contrôleur ainsi qu'un signal de référence, corrélé avec le signal à annuler. Cette structure a notamment donné naissance à une série d'algorithmes basés sur les moindres carrés (LMS ou « least mean square ») : Fx LMS, FR-LMS, dont le but est de minimiser au sens des moindres carrés le signal issu du capteur d'erreur, et ce en fonction du signal de référence.

Deuxièmement, la structure à rétroaction (« feedback »). Cette structure ne nécessite pas de signal de référence tel que pour la structure à précompensation. On se trouve alors dans une structure à rétroaction classique et tous les outils de l'automatique classique (mesure de la robustesse, analyse de la stabilité, performances) peuvent être utilisées. En particulier, une analyse de robustesse du système bouclé par rapport à la variation de fonction de transfert des éléments du système mécanique peut être effectuée. On peut également étudier le comportement fréquentiel du système, non seulement à la fréquence de rejet de la perturbation, mais aussi aux autres fréquences. C'est cette structure à rétroaction qui est à la base de la présente invention.

Pour plus d'informations sur ces deux types de contrôle actif, on peut se référer à l'ouvrage de référence « Signal processing for active control » de S-J. Eliott, Academic Press, San Diego (2001).

On propose donc, dans le cadre d'une isolation vibratoire active moteur-structure matérielle, de mettre en oeuvre un contrôle actif avec un actionneur destiné à contrer les vibrations produites par la machine tournante et qui est installé en relation avec le support de fixation de la machine tournante à la structure matérielle sur laquelle elle est installée, cet actionneur pouvant être placé en série ou en parallèle du support. De préférence, l'actionneur est électromécanique et le signal de commande de l'actionneur est électrique, et plusieurs technologies existent dont électrodynamique ou piézo-électriques, parmi d'autres. Dans d'autres modalités, l'actionneur met en oeuvre un fluide comme une huile dont on fait varier la pression en fonction d'un signal de commande. Dans tous les cas, un calculateur produit initialement un signal de commande qui est électrique, du type numérique ou analogique, et qui sera donc soit transmis directement à l'actionneur, soit converti en signal de fluide par des convertisseurs signal électrique vers fluide (oléo/hydro). On comprend que dans ce dernier cas, la modélisation et stimulation/calculs que l'on va voir prendront en compte cette conversion. On met également en oeuvre un capteur destiné à mesurer les vibrations et au niveau duquel les vibrations seront réduites par l'application du correcteur actif. Ce capteur est en général un accéléromètre. La position particulière du capteur pourra être optimisée en fonction du contexte et en particulier du comportement mécanique de tous les éléments matériels concernés. Si, la plus part du temps le capteur sera en relation directe avec le support de fixation, sur celui-ci, ou, de préférence, sur la structure matérielle, dans d'autres cas, il est placé dans d'autres positions, sur la machine tournante ou plus à distance sur la structure matérielle. In fine, le but de l'isolation vibratoire active proposée est de réduire l'intensité des vibrations au niveau de la structure matérielle à laquelle la machine tournante est fixée par l'intermédiaire de supports.

L'invention concerne donc un procédé de contrôle actif de vibrations mécaniques par mise en oeuvre d'une loi de contrôle constituée d'un correcteur central et d'un paramètre de Youla permettant l'atténuation de perturbations vibratoires mécaniques essentiellement monofréquentielles créées dans une structure matérielle d'un système matériel par au moins une machine tournante fixée par un support à ladite structure matérielle et tournant à une vitesse de rotation déterminable, la fréquence de la perturbation vibratoire étant liée à la vitesse de rotation de la machine tournante et variant en fonction des variations de ladite vitesse de rotation, au moins un actionneur mécanique étant disposé entre la machine tournante et la structure matérielle, ainsi qu'au moins un capteur de vibration produisant des signaux $y(t)$ ou $Y(t)$ selon un cas monovariable ou multivariable respectivement, l'utilisation d'un capteur correspondant à un cas monovariable et l'utilisation de plusieurs capteurs correspondant à un cas multivariable, le/les actionneurs pouvant être en série, dans le support, ou en parallèle du support, le/les capteurs étant reliés à un au moins calculateur commandant le/les actionneurs, le calculateur comportant des moyens de calcul de correction produisant des signaux de commande $u(t)$ ou $U(t)$ selon le cas monovariable ou multivariable respectivement pour le/les actionneurs en fonction, d'une part de mesures du/des capteurs et, d'autre part, d'un paramètre de fréquence de perturbation vibratoire, les moyens de calculs étant configurés selon une loi de commande de correction correspondant à une modélisation par blocs du système, lesdits blocs étant, d'une part, ceux du correcteur central et, d'autre part, un bloc de paramètre de Youla, la modélisation étant telle que seul le paramètre de Youla ait des coefficients dépendant de la fréquence de perturbation vibratoire dans ladite loi de commande de correction, le correcteur central ayant des coefficients fixes, le paramètre de Youla étant sous forme d'un filtre à réponse impulsionnelle infinie, et lors d'une phase préalable de conception on détermine et calcule, d'une part, les paramètres du modèle de la partie du système matériel comportant le/les actionneurs, support(s) et capteur(s) par stimulation de/des actionneurs et mesures par le/les capteurs et, d'autre part, la loi de commande de correction en fonction de fréquences déterminées de perturbations vibratoires, et on stocke dans une mémoire du calculateur au moins les coefficients variables du paramètre de Youla, de préférence dans une table, et lors d'une phase d'utilisation, en temps réel :

- on détermine la fréquence de la perturbation vibratoire courante,
- on calcule la loi de commande de correction, comprenant le correcteur central avec le paramètre de Youla, avec le calculateur en utilisant pour le paramètre de Youla les coefficients mémorisés d'une fréquence de perturbation déterminée correspondant à la fréquence de perturbation courante.

Dans divers modes de mise en oeuvre de l'invention, les moyens suivants pouvant être utilisés seuls ou selon toutes les combinaisons techniquement possibles, sont employés :

- le calculateur est un calculateur numérique, notamment à processeur de signaux numériques (DSP),
- les paramètres du correcteur central sont également stockés dans une mémoire du calculateur lors de la phase préalable de conception,
- le capteur de vibrations est sur la structure matérielle,
- le capteur de vibrations est à l'interface entre le support de fixation et la structure matérielle,
- le capteur de vibrations est sur la structure matérielle en relation directe avec le support,
- le capteur de vibrations est sur le support,
- un calculateur est mis en oeuvre pour chaque machine tournante,
- un calculateur est mis en oeuvre pour plusieurs machines tournantes, les calculs de correction pour chaque machine tournante étant indépendants les uns des autres, (calculs parallèles indépendants)
- la structure matérielle comporte plus d'une machine tournante,
- chacune des machines tournantes comporte son correcteur, actionneur(s) et capteur(s),
- l'actionneur mécanique est un actionneur électromécanique, la commande de l'actionneur étant électrique,
- l'actionneur mécanique est un actionneur hydromécanique, la commande de l'actionneur étant hydraulique, un convertisseur étant disposé entre l'actionneur et le calculateur produisant une commande électrique,
- le système matériel est un aéronef,
- la machine tournante est un moteur d'aéronef,
- le moteur d'aéronef est un moteur de propulsion,
- le moteur d'aéronef est un moteur de génération d'énergie dont électrique,
- l'aéronef est un avion, hélicoptère,
- la structure matérielle est une cellule d'aéronef,
- la structure matérielle est une aile d'avion,
- le capteur est un accéléromètre,
- le support comporte un isolateur vibratoire,
- l'isolateur vibratoire est du type « silentbloc »,

- dans le cas monovariable, dans la phase de conception :

a) - dans un premier temps, on utilise un modèle linéaire du système matériel sous forme d'une fonction de transfert rationnelle discrète, et on détermine et calcule ladite fonction de transfert par stimulation du système matériel par les le(s) actionneur(s) et mesures par le capteur puis application d'un procédé d'identification de système linéaire avec les mesures et le modèle,

b) - dans un deuxième temps, on met en oeuvre un correcteur central appliqué au modèle du système matériel déterminé et calculé au premier temps, le correcteur central étant sous forme d'un correcteur RS de deux blocs $1/So(q^{-1})$ et $Ro(q^{-1})$, dans le correcteur central, le bloc $1/So(q^{-1})$ produisant le signal u(t) et recevant en entrée le signal de sortie inversé du bloc $Ro(q^{-1})$, ledit bloc $Ro(q^{-1})$ recevant en entrée le signal y(t) correspondant à la sommation de la perturbation vibratoire p(t) et de la sortie de la fonction de transfert du modèle du système matériel, et on détermine et calcule le correcteur central,

c) - dans un troisième temps, on adjoint un paramètre de Youla au correcteur central pour former la loi de commande de correction, le paramètre de Youla étant sous forme d'un bloc Q(q$^{-1}$), filtre à réponse impulsionnelle infinie, avec $Q(q^{-1}) = \dfrac{\beta(q^{-1})}{\alpha(q^{-1})}$ $\alpha$, $\beta$ étant des polynômes en $q^{-1}$ adjoint au correcteur central RS, ledit bloc Q(q$^{-1}$) de Youla recevant une estimation de perturbation obtenue par calcul à partir des signaux u(t) et y(t) et en fonction de la fonction de transfert du modèle du système matériel et le signal en sortie dudit bloc $Q(q^{-1})$ de Youla étant soustrait au signal inversé de $Ro(q^{-1})$ envoyé à l'entrée du bloc $1/So(q^{-1})$ du correcteur central RS, et on détermine et calcule le paramètre de Youla dans la loi de commande de correction comportant le correcteur central auquel est associé le paramètre de Youla pour au moins une fréquence de perturbation vibratoire p(t) dont au moins la fréquence déterminée de la perturbation vibratoire à atténuer,

et dans la phase d'utilisation, en temps réel :

- on détermine la fréquence courante de la perturbation vibratoire à atténuer,
- on fait calculer au calculateur la loi de commande de correction, comprenant le correcteur RS avec le paramètre de Youla, en utilisant, pour le paramètre de Youla les coefficients qui ont été calculés pour une fréquence de perturbation vibratoire correspondant à la fréquence courante de perturbation vibratoire à atténuer, les coefficients de $Ro(q^{-1})$ et $So(q^{-1})$ étant fixes,

- dans la phase de conception, on effectue les opérations suivantes :

a) - dans le premier temps, on excite le système matériel en appliquant au(x) actionneurs(s) un signal d'excitation dont la densité spectrale est sensiblement uniforme sur une bande de fréquence utile,

b) - dans le deuxième temps, on détermine et calcule les polynômes $Ro(q^{-1})$ et $So(q^{-1})$ du correcteur central de manière à ce que ledit correcteur central soit équivalent à un correcteur calculé par placement des pôles de la boucle fermée dans l'application du correcteur central à la fonction de transfert du modèle du système matériel, ,

c) - dans le troisième temps, on détermine et calcule les numérateur et dénominateur du bloc $Q(q^{-1})$ de Youla au sein de la loi de commande de correction pour au moins une fréquence de perturbation vibratoire p(t) dont au moins la fréquence déterminée de perturbation vibratoire à atténuer, ceci en fonction d'un critère d'atténuation, le bloc $Q(q^{-1})$ étant exprimé sous forme d'un rapport B(q$^{-1}$)/$\alpha$(q$^{-1}$), $\alpha$, $\beta$ étant des polynômes en $q^{-1}$, afin d'obtenir des valeurs de coefficients des polynômes $\alpha$(q$^{-1}$) et $\beta$(q$^{-1}$) pour la/chacune des fréquences, le calcul de $\beta$(q$^{-1}$) et $\alpha$(q$^{-1}$) se faisant par l'obtention d'une fonction de transfert discrète Hs(q$^{-1}$)/$\alpha$(q$^{-1}$) résultant de la discrétisation d'une cellule du second ordre continu, le polynôme $\beta$(q$^{-1}$) se calculant par la résolution d'une équation de Bézout,

et dans la phase d'utilisation, en temps réel, on effectue les opérations suivantes : on détermine la fréquence courante de la perturbation vibratoire à atténuer et on fait calculer au calculateur la loi de commande de correction, correcteur central à coefficients fixes avec paramètre de Youla à coefficients variables, pour produire le signal u(t) envoyé au/aux actionneurs, en fonction des mesures y(t) du capteur et en utilisant pour le bloc $Q(q^{-1})$ de Youla les valeurs des coefficients des polynômes $\alpha$(q$^{-1}$) et $\beta$(q$^{-1}$) déterminées et calculées pour une fréquence déterminée correspondant à la fréquence courante,

- on utilise pour le modèle du système matériel une fonction de transfert de la forme :

$$\frac{y(t)}{u(t)} = \frac{q^{-d} B(q^{-1})}{A(q^{-1})}$$

où d est le nombre de périodes d'échantillonnage de retard du système, B et A sont des polynômes en $q^{-1}$ de la forme :

$$B(q^{-1}) = b_0 + b_1 \cdot q^{-1} + \cdots b_{nb} \cdot q^{-nb}$$

$$A(q^{-1}) = 1 + a_1 \cdot q^{-1} + \cdots a_{na} \cdot q^{-na}$$

les $b_i$ et $a_i$ étant des scalaires, et $q^{-1}$ étant l'opérateur retard d'une période d'échantillonnage, et le calcul de l'estimation de perturbation vibratoire est obtenu par application de la fonction $q^{-d}B(q^{-1})$ à u(t) et soustraction du résultat à l'application de y(t) à la fonction $A(q^{-1})$,

- pour le temps b), on détermine et calcule les polynômes $Ro(q^{-1})$ et $So(q^{-1})$ du correcteur central par une méthode de placement des pôles de la boucle fermée,
- dans le cas mono et multivariable, dans la phase de conception :

a) - dans un premier temps, on utilise un modèle linéaire du système matériel sous forme de représentation d'état de blocs matriciels H, W, G et $q^{-1}$.I, G étant une matrice de transition, H étant une matrice d'entrée, W étant une matrice de sortie et I la matrice identité, ladite représentation d'état pouvant s'exprimer par une équation de récurrence :

$$X(t + Te) = G \cdot X(t) + H \cdot U(t)$$

$$Y(t) = W \cdot X(t)$$

avec $X(t)$ : vecteur d'état, $U(t)$ : vecteur des entrées, $Y(t)$ : vecteur des sorties, et on détermine et calcule ledit modèle du système matériel par stimulation du système matériel par le(s) actionneur(s) et mesures par les capteurs puis application d'un procédé d'identification de système linéaire avec les mesures et le modèle,

b) - dans un deuxième temps, on met en oeuvre un correcteur central appliqué au modèle du système matériel déterminé et calculé au premier temps, le correcteur central étant sous forme observateur d'état et retour d'état estimé qui exprime $\hat{X}$ un vecteur d'état de l'observateur itérativement en fonction de Kf un gain de l'observateur, Kc un vecteur de retour sur l'état estimé, ainsi que du modèle du système matériel déterminé et calculé au premier temps, soit :

$$\hat{X}(t + Te) = (G - Kf \cdot W) \cdot \hat{X}(t + Te) + H \cdot U(k) + \dot{K}f \cdot (Y(t + Te))$$

avec une commande $U(t) = -Kc \cdot \hat{X}(t)$, et on détermine et calcule ledit correcteur central,

c) - dans un troisième temps, on adjoint un paramètre de Youla au correcteur central pour former la loi de commande de correction, le paramètre de Youla étant sous forme d'un bloc Q mono ou multivariable, de matrices d'état $A_Q$, $B_Q$, $C_Q$, adjoint au correcteur central exprimé également sous forme de représentation d'état, bloc Q dont la sortie soustraite à la sortie du correcteur central produit le signal U(t) et dont l'entrée reçoit le signal Y(t) auquel est soustrait le signal $w \cdot \hat{x}_{(t)}$, et on détermine et calcule le paramètre de Youla dans la loi de commande de correction comportant le correcteur central auquel est associé le paramètre de Youla pour au moins une fréquence de perturbation vibratoire P(t) dont au moins la fréquence déterminée de perturbation vibratoire à atténuer,

et dans la phase d'utilisation, en temps réel :

- on détermine la fréquence courante de la perturbation vibratoire à atténuer,
- on fait calculer au calculateur la loi de commande de correction, comprenant le correcteur central à coefficients fixes avec le paramètre de Youla à coefficients variables, en utilisant, pour le paramètre de Youla les coefficients qui ont été calculés pour une fréquence de perturbation vibratoire correspondant à la fréquence courante de perturbation vibratoire à atténuer,

est le vecteur d'état du paramètre de Youla à l'instant t,

- dans la phase de conception, on effectue les opérations suivantes :

a) - dans le premier temps, on excite le système matériel en appliquant aux actionneurs des signaux d'excitation dont la densité spectrale est sensiblement uniforme sur une bande de fréquence utile, les signaux d'excitation étant décorrélés entre-eux,

b) - dans le deuxième temps, on détermine et calcule le correcteur central de manière à ce qu'il soit équivalent à un correcteur avec observateur d'état et retour sur l'état, *Kf* étant obtenu par optimisation quadratique (LQ), et le gain de retour d'état *Kc* choisi de façon à assurer la robustesse de la loi de commande munie du paramètre de Youla, au moyen d'une optimisation quadratique (LQ),

c) - dans le troisième temps, on détermine et calcule, les coefficients du bloc *Q* de Youla au sein de la loi de commande de correction pour au moins une fréquence de perturbation vibratoire P(t) dont au moins la fréquence déterminée de perturbation vibratoire à atténuer en fonction d'un critère d'atténuation, afin d'obtenir des valeurs de coefficients du paramètre de Youla pour la/chacune des fréquences, et

dans la phase d'utilisation, en temps réel, on effectue les opérations suivantes :

on détermine la fréquence courante de la perturbation vibratoire à atténuer et on fait calculer au calculateur la loi de commande de correction, correcteur central à coefficients fixes avec paramètre de Youla à coefficients variables, pour produire le signal U(t) envoyé aux actionneurs, en fonction des mesures Y(t) des capteurs et en utilisant pour le paramètre de Youla les valeurs des coefficients déterminées et calculées pour une fréquence déterminée correspondant à la fréquence courante,

- l'application est adaptée à un ensemble de fréquences déterminées de perturbations vibratoires à atténuer et on répète le temps c) pour chacune des fréquences déterminées et, en phase d'utilisation lorsque aucune des fréquences déterminées ne correspond à la fréquence courante du perturbation vibratoire à atténuer, on fait une interpolation à ladite fréquence courante pour les valeurs des coefficients du bloc *Q* de Youla à partir des valeurs de coefficients dudit bloc *Q* de Youla connus pour les fréquences déterminées,
- les signaux sont échantillonnés à une fréquence Fe et au temps a) on utilise une bande de fréquence utile du signal d'excitation qui est sensiblement [0, Fe/2],
- avant la phase d'utilisation, on ajoute à la phase de conception un quatrième temps d) de vérification de la stabilité et de la robustesse du modèle du système matériel et de la loi de commande de correction, correcteur central avec paramètre de Youla, obtenus précédemment aux temps a) à c) en faisant une simulation de la loi de commande de correction obtenue aux temps b) et c) appliqué au modèle du système matériel obtenu au temps a) pour la/les fréquences déterminées et lorsque un critère prédéterminé de stabilité et/ou robustesse n'est pas respecté, on réitère au moins le temps c) en modifiant le critère d'atténuation,
- la phase de conception est une phase préalable et elle est effectuée une fois, préalablement à la phase d'utilisation, avec mémorisation des résultats des déterminations et calculs pour utilisation dans la phase d'utilisation,
- la fréquence courante de la perturbation vibratoire à atténuer est déterminée à partir de la mesure de la vitesse de rotation de la machine tournante,
- le procédé est mis en oeuvre pour atténuation d'une seule fréquence de perturbation vibratoire mécanique à la fois,
- le procédé est mis en oeuvre pour atténuation de deux ou plus fréquences de perturbations vibratoires mécaniques à la fois.

Le calculateur est un calculateur programmable et l'invention concerne également un support d'instructions permettant de commander directement ou indirectement le calculateur pour qu'il fonctionne selon l'invention et notamment en temps réel dans la phase d'utilisation.

L'invention concerne également une application d'un système correcteur actif à correcteur central et paramètre de Youla à l'atténuation de perturbations vibratoires mécaniques basé sur les méthodes présentées.

L'invention concerne également un dispositif d'atténuation de perturbations vibratoires comportant des moyens matériels spécifiquement structurés et configurés pour l'exécution du procédé présenté. Plus précisément, l'invention concerne notamment un dispositif comportant des moyens de contrôle actif de vibrations mécaniques par mise en oeuvre d'une loi de contrôle constituée d'un correcteur central et d'un paramètre de Youla permettant la mise en oeuvre du procédé de l'une quelconque des revendications précédentes d'atténuation de perturbations vibratoires mécaniques essentiellement monofréquentielles créées dans une structure matérielle d'un système matériel par au moins une machine tournante fixée par un support à ladite structure matérielle et tournant à une vitesse de rotation déterminable, la fréquence de la perturbation vibratoire étant liée à la vitesse de rotation de la machine tournante et variant en fonction des variations de ladite vitesse de rotation, le dispositif comportant en outre au moins un actionneur mécanique disposé entre la machine tournante et la structure matérielle, ainsi qu'au moins un capteur de vibration produisant des signaux y(t) ou Y(t) selon un cas monovariable ou multivariable respectivement, l'utilisation d'un capteur correspondant à un cas monovariable et l'utilisation de plusieurs capteurs correspondant à un cas multivariable, le/les actionneurs pouvant être en série, dans le support, ou en parallèle du support, le/les capteurs étant reliés à au moins un calculateur du dispositif commandant le/les actionneurs, le calculateur comportant des moyens de calcul de correction produisant des signaux de commande u(t) ou U(t) selon le cas monovariable ou multivariable respectivement pour le/les actionneurs en fonction, d'une part de mesures du/des capteurs et, d'autre part, d'un paramètre de fréquence de perturbation vibratoire, le calculateur comportant des moyens de calculs configurés selon une loi de commande de correction correspondant à une modélisation par blocs du système, lesdits blocs étant, d'une part, ceux du correcteur central et, d'autre part, un bloc de paramètre de Youla, la modélisation étant telle que seul le paramètre de Youla ait des coefficients dépendant de la fréquence de perturbation vibratoire dans ladite loi de commande de correction, le correcteur central ayant des coefficients fixes, le paramètre de Youla étant sous forme d'un filtre à réponse impulsionnelle infinie, lors d'une phase préalable de conception, ayant été déterminés et calculés, d'une part, les paramètres du modèle de la partie du système matériel comportant le/les actionneurs, support(s) et capteur(s) par stimulation de/des actionneurs et mesures par le/les capteurs et, d'autre part, la loi de commande de correction en fonction de fréquences déterminées de perturbations vibratoires, et on stocke dans une mémoire du calculateur au moins les coefficients variables du paramètre de Youla, de préférence dans une table, le dispositif permettant lors d'une phase d'utilisation, en temps réel, la détermination de la fréquence de la perturbation vibratoire courante et le calcul de la loi de commande de correction, comprenant le correcteur central avec le paramètre de Youla, avec le calculateur en utilisant pour le paramètre de Youla les coefficients mémorisés d'une fréquence de perturbation déterminée correspondant à la fréquence de perturbation courante.

Le dispositif comporte essentiellement des moyens de contrôle actif de vibrations mécaniques, au moins un actionneur mécanique, au moins un capteur de vibration et au moins un calculateur.

La présente invention, sans qu'elle en soit pour autant limitée, va maintenant être exemplifiée avec la description qui suit en relation avec :

la Figure 1 qui représente schématiquement une première possibilité de montage, en série, de l'actionneur par rapport au support de la machine rotative,
la Figure 2 qui représente schématiquement une seconde possibilité de montage, en parallèle, de l'actionneur par rapport au support de la machine rotative,
la Figure 3 qui représente l'application de la loi de commande avec bouclage entre actionneur et capteur en relation avec une machine tournante reliée par un support à une structure matérielle,
la Figure 4 qui représente schématiquement le temps de la stimulation du système matériel réel destiné à en déterminer et calculer le modèle sous forme d'une fonction de transfert, un signal $u(t)$ d'excitation de spectre approchant un bruit blanc étant envoyé sur l'actionneur,
la Figure 5 qui représente un système RST bouclé sur le modèle du système matériel avec T=0 et dans le cas monovariable,
la Figure 6 qui représente un cas monovariable de correcteur RST avec T=0 et auquel on a adjoint un paramètre de Youla, bouclé sur le modèle du système matériel,
la Figure 7 qui représente un schéma complet de la loi de commande de correction avec un correcteur central de type RS auquel on a adjoint un paramètre de Youla et permettant des calculs en temps réel en phase d'utilisation pour atténuation de perturbations vibratoires,
la Figure 8 qui représente un schéma du transfert sur un système à 2 actionneurs et deux capteurs, donc dans le cas multivariable,
la Figure 9 qui représente sous forme de schéma bloc le système à commander, c'est à dire le modèle du système matériel à machine tournante dans le cas multivariable,
la Figure 10 qui représente sous forme de schéma bloc le correcteur central dans le cas multivariable,
la Figure 11 qui représente sous forme de schéma bloc le correcteur central appliqué au modèle du système matériel dans le cas multivariable,
la Figure 12 qui représente sous forme de schéma bloc la loi de commande de correction, correcteur central + paramètre de Youla, appliqué au modèle du système matériel dans le cas multivariable, et
la Figure 13 qui représente sous forme de schéma bloc la loi de commande de correction, correcteur central + paramètre de Youla, tel qu'utilisé en temps réel pour atténuation de perturbation vibratoire, dans le cas multivariable.

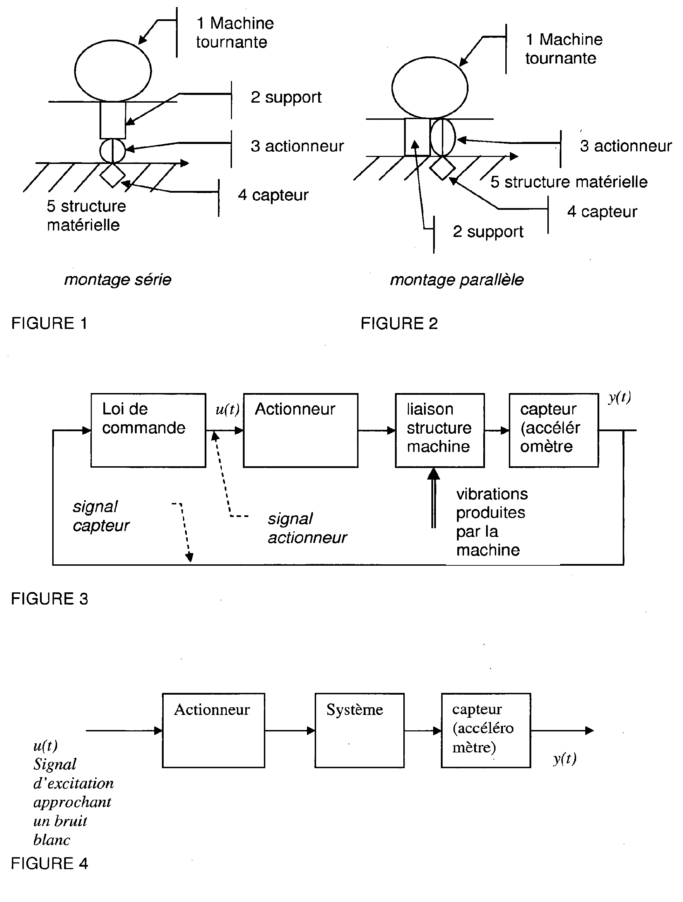

Dans ce qui suit, on présente un dispositif de contrôle actif de vibration pour l'isolation active de machines tournantes. La machine tournante 1 est reliée à une structure matérielle 5 par l'intermédiaire d'un ou plusieurs supports 2 de fixation comportant ou non des moyens d'amortissement mécanique des vibrations de type « silentbloc » ou autre. Le dispositif est constitué d'au moins un capteur 4 et d'un ou plusieurs actionneurs 3 intégrés dans le/les supports de la machine tournante, cf. montage série Figure 1, ou en parallèle du/des supports de la machine tournante, cf. montage parallèle Figure 2.

Sur les Figures 1 et 2, le schéma a été simplifié avec un seul actionneur et un seul capteur pour le support unique représenté. En pratique, la machine tournante peut être reliée à la structure matérielle par plusieurs supports et chaque support peut comporter un ou plusieurs actionneurs. De préférence on met en oeuvre un capteur par support, capteur qui est sur la structure matérielle mais en relation directe avec le support, par exemple sur le moyen de fixation du support à la structure matérielle. Le support est en général un plot passif amortisseur. Dans des variantes, un montage série+parallèle d'actionneurs sur un même support est mis en oeuvre.

Les actionneurs sont contrôlés par un calculateur configuré avec une loi de commande qui élabore des signaux de commande à partir du signal reçu du/des capteurs et en fonction de la fréquence de la perturbation vibratoire que l'on cherche à réduire ou supprimer et qui est en relation avec la vitesse de rotation de la machine tournante. On prendra le cas d'un calculateur numérique avec échantillonnage de signaux analogiques acquis et conversions vers l'analogique, les capteurs et actionneurs fonctionnant habituellement en analogique, l'information de fréquence de la perturbation vibratoire et/ou de vitesse de rotation de la machine tournante pouvant être initialement analogique ou numérique.

A noter que sur certaines des figures, on a utilisé le terme « ensemble (électro)mécanique » pour signifier que le système matériel avec la machine tournante, le/les supports de fixation à la structure matérielle et le capteur, comporte un actionneur préférentiellement à commande électrique mais que cette commande peut être de type fluidique en variante.

On va maintenant expliquer la manière dont on est parvenu à la loi de commande proposée et son application à divers cas. En particulier on va décrire la structure de la loi de commande ainsi que la méthodologie destinée à régler cette loi de commande.

Le schéma d'application de la loi de commande revenant à établir un bouclage entre actionneur(s) et capteur(s) en relation avec une machine tournante reliée par un support à une structure matérielle est représenté sur la Figure 3. Le signal de commande de l'actionneur est noté $u(t)$ et le signal provenant du capteur noté $y(t)$. Le support peut être plus ou moins complexe et correspondre à une ou plusieurs liaisons mécaniques entre la machine tournante et le support.

L'objectif est de rejeter une perturbation vibratoire monofréquentielle dont on suppose connue la fréquence grâce à l'information sur la vitesse de rotation de la machine tournante, par exemple donnée par un tachymètre. En effet, la fréquence de la perturbation vibratoire correspond à la fréquence de rotation de la machine tournante ou à un multiple de celle-ci.

Afin de synthétiser une loi de commande, on doit disposer d'un modèle du système matériel constitué des divers éléments le constituant, c'est-à-dire de la machine tournante montée sur la structure matérielle par l'intermédiaire d'un/de supports de fixation et les actionneur(s), capteur(s) associés. Ce modèle doit se présenter sous la forme d'une fonction de transfert rationnelle (c'est-à-dire un filtre à réponse impulsionnelle infinie) discrète, le calculateur fonctionnant à la période Te (en seconde) et à la fréquence Fe=1/Te en (Hertz). L'approximation linéaire du système est justifiée compte tenu du niveau des signaux en jeux. L'ordre de la fonction de transfert du modèle est de dimension suffisamment réduite pour ne pas aboutir à un volume de calculs trop grand, mais suffisamment grande pour approximer correctement le modèle. Pour ce faire, le suréchantillonnage est à éviter.

Cette fonction de transfert décrit le comportement du système matériel entre les points $u(t)$ signal de commande de l'actionneur et $y(t)$ signal mesuré par le capteur en dehors de tout bouclage.

Si l'on pose $q^{-1}$ l'opérateur retard, la fonction de transfert recherchée est de la forme :

$$\frac{y(t)}{u(t)} = \frac{q^{-d}B(q^{-1})}{A(q^{-1})}$$

L'identification permettant de calculer la fonction de transfert pour le système matériel considéré, est réalisée en stimulant le système avec un signal $u(t)$ dont le spectre approche celui d'une vibration type bruit blanc sur la plage de fréquences [0, Fe/2]. Fe/2 étant la fréquence de Nyquist.

Un tel signal d'excitation peut être produit par exemple par une SBPA (séquence binaire pseudo-aléatoire). En pratique, on excite l'actionneur avec un signal $u(t)$ proche d'un bruit blanc comme représenté Figure 4.

Cette stimulation doit être effectuée en l'absence de vibration extérieure perturbatrice, c'est-à-dire que la machine tournante doit être à l'arrêt. Toutes les données de l'essai u(t) et y(t) pendant le temps du test sont enregistrées afin d'être exploitées hors ligne pour calcul de la fonction de transfert.

Les algorithmes d'identification des systèmes linéaires sont nombreux dans la littérature. Afin d'avoir un aperçu des méthodologies utilisables, on peut se référer par exemple à l'ouvrage de I.D. Landau : « Commande des systèmes » (2002). Après obtention de la fonction de transfert rationnelle, l'identification doit être validée, afin de s'assurer que le modèle obtenu est correct. Diverses méthodes de validation existent en fonction des hypothèses émises sur les perturbations affectant le modèle (par exemple test de la blancheur de l'erreur de prédiction). On recommande aussi de valider le modèle par des comparaisons entre des résultats de simulation et le système réel soumis à des excitations monofréquentielles (comparaison sur l'amplitude et la phase des signaux) sur une plage de fréquences correspondant à la plage d'intérêt pour le rejet des perturbations.

Après l'obtention d'une fonction de transfert correspondant au modèle du système matériel et validation de celle-ci au moyen des outils appropriés, il s'agit de synthétiser la loi de commande permettant le rejet d'une perturbation de fréquence f variable.

La caractérisation du niveau de rejet de la perturbation mécanique, vibration, qui agit sur le système se fait au moyen de la fonction de sensibilité directe du système bouclé notée Syp.

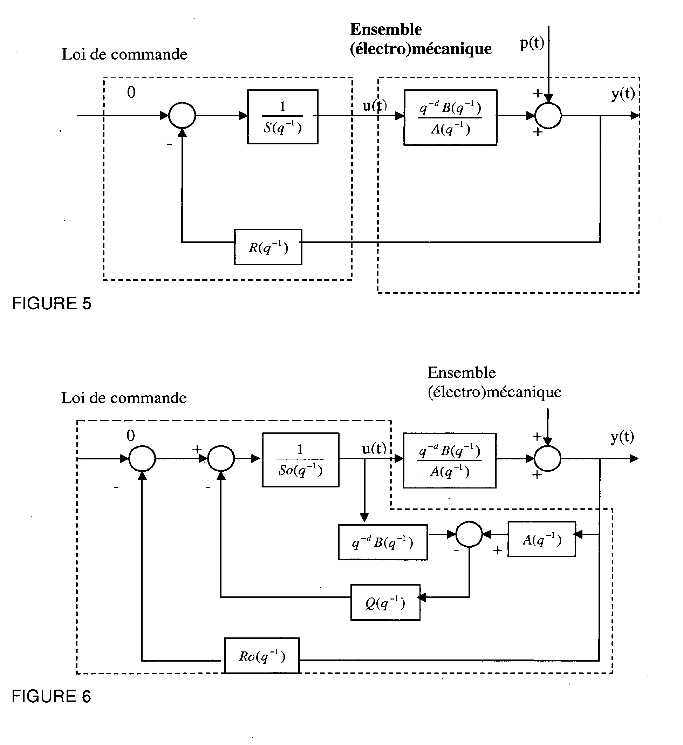

Supposons que la loi de commande soit du type RST avec T=0 qui est la forme d'implantation la plus générale d'un correcteur monovariable. On peut alors schématiser le système bouclé par le bloc diagramme de la Figure 5. Sur cette Figure 5, le bloc $\dfrac{q^{-d}B(q^{-1})}{A(q^{-1})}$ correspond à la fonction de transfert du système matériel décrite plus haut.

Le signal p(t) est l'équivalent de la perturbation vibratoire que l'on a déportée en sortie du système, sans perte de généralité.

On peut définir la fonction de sensibilité directe Syp comme la fonction de transfert entre le signal p(t) et y(t) signal capteur. Cette fonction de transfert décrit le comportement de la boucle fermée concernant le rejet de perturbation mécanique vibratoire.

En particulier, l'obtention de cette fonction de transfert permet de connaître à toute fréquence la qualité de rejet de perturbation.

On montre que cette fonction de transfert s'écrit :

$$S_{yp} = \frac{A(q^{-1})S(q^{-1})}{A(q^{-1})S(q^{-1}) + q^{-d}B(q^{-1})R(q^{-1})} \qquad (1)$$

L'objet de la loi de commande étant de permettre le rejet de perturbation à une fréquence fpert, il faut qu'à ladite fréquence le module de Syp soit faible, en pratique très en dessous de 0 dB.

Dans l'idéal, il serait souhaitable que Syp soit la plus basse possible à toutes les fréquences, néanmoins cet objectif n'est pas atteignable du fait du théorème de Bode-Freudenberg-Looze qui montre que si le système en boucle fermée est asymptotiquement stable et stable en boucle ouverte, on a :

$$\int_0^{0.5.Fe} \log\left|S_{yp}(e^{-j2\pi f.Fe)}\right| df = 0$$

Cette équation signifie que la somme des aires entre la courbe du module de sensibilité et l'axe 0 dB prises avec leur signe est nulle. Cela implique que l'atténuation de la perturbation dans une certaine zone de fréquence entraînera nécessairement l'amplification des perturbations dans d'autres zones de fréquence.

On a vu plus haut que le dénominateur de Syp s'écrit : $A(q^{-1})S(q^{-1})+q^{-d}B(q^{-1})R(q^{-1})$. Les zéros de ce dénominateur constituent les pôles de la boucle fermée.

Le calcul des coefficients des polynômes $R(q^{-1})$ et $S(q^{-1})$ peut notamment se faire par une technique de placement de pôles. Cette technique n'est pas de loin la seule utilisable afin de synthétiser un correcteur linéaire. On l'emploie ici. Elle revient à calculer les coefficients de R et S en spécifiant les pôles de la boucle fermée qui sont les zéros du polynôme P, soit :

$$P(q^{-1}) = A(q^{-1})S(q^{-1}) + q^{-d}B(q^{-1})R(q^{-1}). \qquad (2)$$

Après avoir choisi ces pôles, on calcule P et on résout l'équation (2) qui est une équation de Bézout.

Le choix des pôles peut se faire suivant diverses stratégies. L'une de ces stratégies est proposée plus bas.

L'annulation de l'effet des perturbations p(t) sur la sortie est obtenue aux fréquences où

$$A(e^{-j2\pi f/Fe})S(e^{-j2\pi f/Fe}) = 0 \tag{3}$$

Aussi, afin de calculer un correcteur rejetant une perturbation à la fréquence Fpert, on spécifie à priori une partie de S, en imposant dans l'équation (2) que S se factorise par Hs polynôme d'ordre 2 pour une perturbation monofréquentielle. C'est-à-dire :

$$Hs = 1 + h_1 \cdot q^{-1} + h_2 \cdot q^{-2} \tag{4}$$

Si on $\begin{aligned} h_1 &= -2\cos(2\pi.fpert/Fe) \\ h_2 &= 1 \end{aligned}$ , on introduit une paire de zéros complexes non amortis à la fréquence fpert.

En choisissant $h_2 \neq 1$ on introduit une paire de zéros complexes à amortissement non nul dans S, amortissement choisi en fonction de l'atténuation souhaitée à une certaine fréquence.

L'équation de Bézout à résoudre est alors :

$$S'(q^{-1}) \cdot Hs(q^{-1}).A(q^{-1}) + B(q^{-1})R(q^{-1}) = P(q^{-1}) \tag{5}$$

Cependant, la fréquence de vibration à rejeter est en général variable, fonction notamment de la vitesse de rotation de l'arbre moteur. Il en résulte que le bloc, Hs devrait également varier en fonction de la fréquence de la perturbation vibratoire. En conséquence, on aurait également à résoudre une équation de Bézout de la forme (5) et cela pour chaque fréquence à rejeter.

On voit que cela amènerait un gros volume de calculs s'il fallait implémenter en temps réel la résolution de cette équation. Par ailleurs, tous les coefficients S et R du correcteur seraient appelés à varier lors d'un changement de fréquence. Cela aboutit à un algorithme très lourd et non réalisable industriellement.

Afin de résoudre ce problème, on va proposer dans la suite une solution basée sur le concept de paramétrisation de Youla-Kucera.

Un système monovariable piloté par un correcteur de type RS auquel on a adjoint le paramètre de Youla se présente sous la forme représentée Figure 6.

Un tel correcteur est basé sur un correcteur RS dit central constitué des blocs $Ro(q^{-1})$ et $So(q^{-1})$. Le paramètre de Youla est le bloc $Q(q^{-1}) = \dfrac{\beta(q^{-1})}{\alpha(q^{-1})}$ , $\alpha$, $\beta$ étant des polynômes en $q^{-1}$. Les blocs $q^{-d}B(q^{-1})$ et $A(q^{-1})$ sont les numérateur et dénominateur de la fonction de transfert du système à contrôler et dont on a vu la façon de déterminer et calculer les paramètres de la fonction de transfert par stimulation et identification.

L'ensemble du correcteur auquel on est arrivé est équivalent à un correcteur de type (R,S) dont les blocs R et S sont égaux à :

$$\begin{aligned} R(q^{-1}) &= Ro(q^{-1}) \cdot \alpha(q^{-1}) + A(q^{-1}) \cdot \beta(q^{-1}) \\ S(q^{-1}) &= So(q^{-1}) \cdot \alpha(q^{-1}) - q^{-d}B(q^{-1}) \cdot \beta(q^{-1}) \end{aligned} \tag{6}$$

Supposons qu'un correcteur central ait été constitué et qu'il stabilise le système.

Sans paramétrisation de Youla le polynôme caractéristique Po du système, comme vu plus haut, s'écrit :

$$Po(q^{-1}) = A(q^{-1}).So(q^{-1}) + q^{-d}B(q^{-1}).Ro(q^{-1}) \tag{7}$$

En munissant le correcteur du paramètre de Youla, le polynôme caractéristique du système s'écrit :

$$P(q^{-1}) = A(q^{-1}).\left(So(q^{-1}).\alpha(q^{-1}) - q^{-d}B(q^{-1}).\beta(q^{-1})\right) + q^{-d}B(q^{-1}).\left(Ro(q^{-1}).\alpha(q^{-1}) + A(q^{-1}).\beta(q^{-1})\right) = Po(q^{-1})\alpha(q^{-1})$$

On voit

$$P(q^{-1}) = Po(q^{-1}).\alpha(q^{-1})$$

donc que les pôles de Q (zéros de $\alpha$) viennent s'adjoindre aux pôles de la boucle équipée seulement du correcteur central dont le polynôme caractéristique est Po.

Par ailleurs, on peut se servir de l'équation :

$$S(q^{-1}) = So(q^{-1}).\alpha(q^{-1}) - q^{-d}B(q^{-1})\beta(q^{-1}) \tag{8}$$

afin de spécifier le bloc S avec un bloc de préspécification Hs, c'est-à-dire :

$$S'(q^{-1}).Hs(q^{-1}) = So(q^{-1}).\alpha(q^{-1}) - q^{-d}B(q^{-1})\beta(q^{-1})$$

Soit :

$$S'(q^{-1}).Hs(q^{-1}) + q^{-d}B(q^{-1})\beta(q^{-1}) = So(q^{-1}).\alpha(q^{-1}) \tag{9}$$

qui est également une équation de Bézout, permettant notamment de trouver $\beta$ si $\alpha$ et Hs sont définis.

On peut noter que la paramétrisation de Youla a déjà été utilisée à des fins de rejet de perturbation sinusoïdale : il s'agit du contrôle des vibrations d'une suspension active. L'article correspondant est : « Adaptive narrow disturbance applied to an active suspension - an internal model approach » (Automatica 2005), dont les auteurs sont I.D Landau, et al. Dans ce dernier dispositif, le paramètre de Youla est sous forme d'un filtre à réponse impulsionnelle finie (fonction de transfert avec un seul numérateur) alors que dans la présente invention on va voir que ce paramètre de Youla est sous forme d'un filtre à réponse impulsionnelle infinie (fonction de transfert avec un numérateur et dénominateur). De plus, dans cet article, le calcul des coefficients du paramètre de Youla se fait au moyen d'un dispositif adaptatif, c'est-à-dire que l'information sur la fréquence de perturbation n'est pas connue à la différence de la présente invention où l'on connaît cette fréquence à partir de mesures, par exemple à partir d'un compte-tour, et où les coefficients du paramètre de Youla sont stockés dans des tables pour leur utilisation en temps réel. Les dispositif et procédé utilisés dans l'invention permettent une beaucoup plus grande robustesse de la loi de commande. Dans le cas d'espèce de l'invention, cela correspond à une insensibilité de la loi de commande aux variations paramétriques du modèle du système, ce qui, d'un point de vue industriel, est un élément capital.

Revenant au correcteur proposé, soit Sypo la fonction de sensibilité directe du système bouclé avec le correcteur central. La fonction de sensibilité directe du système bouclé avec correcteur muni du paramètre de Youla, s'écrit :

$$S_{yp} = S_{ypo} - \frac{q^{-d}B(q^{-1})}{P(q^{-1})}Q(q^{-1}) \tag{10}$$

Ainsi, à partir d'un système bouclé comprenant un correcteur central n'ayant pas vocation à rejeter une perturbation sinusoïdale à une fréquence fpert en particulier, on peut adjoindre au correcteur central le paramètre de Youla qui va modifier la fonction de sensibilité Syp, tout en maintenant les pôles de la boucle fermée munie du correcteur central, auxquels s'adjoindront les pôles de Q.

On peut ainsi créer une encoche dans Syp à la fréquence fpert.

Pour cela, on calcule Hs et $\alpha$ tel que la fonction de transfert $\dfrac{Hs(q^{-1})}{\alpha(q^{-1})}$ résulte de la discrétisation (méthode de Tustin avec « prewarping ») d'un bloc continu du second ordre :

$$\frac{\dfrac{s^2}{(2\pi.fpert)^2}+\dfrac{\varsigma_1.s}{(2\pi.fpert)}+1}{\dfrac{s^2}{(2\pi.fpert)^2}+\dfrac{\varsigma_2.s}{(2\pi.fpert)}+1}$$

On montre que l'atténuation M à la fréquence fpert est donnée par la relation :

$$M = 20\log(\frac{\varsigma_1}{\varsigma_2}) \text{ avec } \varsigma_1 < \varsigma_2 \qquad (11)$$

Par ailleurs, pour un rapport égal de $\dfrac{\varsigma_1}{\varsigma_2}$ montre que l'encoche sur la fonction de sensibilité Syp est d'autant plus large que $\varsigma_2$ est grand. Mais plus cette encoche est large, plus |Syp| se trouve déformée aux fréquences autres que fpert. Aussi un compromis est-il à trouver afin de créer une atténuation suffisamment large autour de fpert sans provoquer une remontée trop importante de |Syp| aux autres fréquences.

On peut ensuite calculer $\beta$ par résolution de l'équation de Bézout (9).

On montre que ce choix de Hs et $\alpha$ crée une encoche dans la fonction de sensibilité Syp tout en ayant un effet quasi négligeable aux autres fréquences par rapport à Sypo, même si, bien sûr, le théorème de Bode Freudenberg Looze s'applique, ce qui amène fatalement une remontée du module de Syp par rapport à Sypo à d'autres fréquences que fpert.

Cette remontée de la fonction de sensibilité peut diminuer la robustesse de la boucle fermée mesurable par la marge de module (distance au point -1 du lieu de la boucle ouverte corrigée dans le plan de Nyquist) égale à l'inverse du maximum de |Syp| sur la plage de fréquence [0 ;Fe/2].

L'avantage principal de l'utilisation de la paramétrisation de Youla est que $\alpha$ est d'ordre 2 :

$$\alpha(q^{-1}) = 1 + \alpha_1.q^{-1} + \alpha_2.q^{-2} \qquad (12)$$

de plus $\beta$ est d'ordre 1

$$\beta(q^{-1}) = \beta_1.q^{-1} + \beta_2.q^{-2} \qquad (13)$$

Ainsi, le nombre de paramètres variants en fonction de la fréquence dans la loi de commande n'est que de 4. Le calcul de ces paramètres en fonction de la fréquence vibratoire a rejeter peut être effectué hors ligne (résolution de l'équation de Bézout (9), lors de la phase préalable de conception de la loi de commande, les paramètres pouvant être mémorisés dans des tables du calculateur et appelés, lors du fonctionnement en temps réel, en fonction de la fréquence de la perturbation vibratoire et donc de la vitesse de rotation de la machine tournante qui peut être obtenue à partir d'un compte tour.

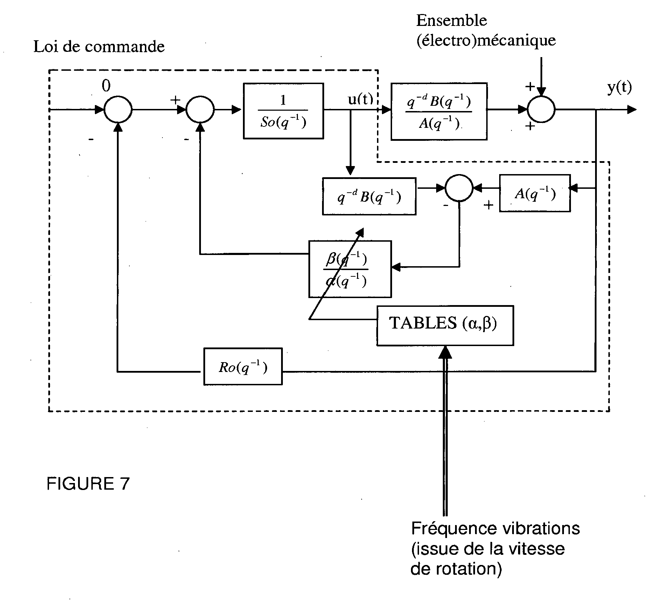

La figure 7 donne le schéma complet de la loi de commande obtenue.

On va maintenant expliciter une méthodologie destinée à la synthèse de la loi de commande.

On synthétise le correcteur central de telle sorte qu'il garantisse des marges de gain d'au moins 10 dB et une marge de phase suffisamment importante.

Ceci peut être obtenu par exemple par une technique de placement de pôles. Diverses méthodologies ont été développées par des chercheurs tels Philippe de larminat dans « Automatique appliquée 2ème édition, Hermès 2009, ou loan Doré landau dans « Commande des systèmes », Hermès 2002.

Le placement des pôles de la boucle fermée se fait en plaçant n pôles dominants en utilisant par exemple la stratégie « ppa » décrite dans l'ouvrage de Philippe de Larminat précité.

On place également un certains nombres de pôles auxiliaires en « haute fréquence » ,Ces pôles auxiliaires ont pour rôle d'augmenter la robustesse de la loi de commande. Cela peut se faire par la stratégie « ppb » décrite dans l'ouvrage de Philippe de Larminat précité.

Après avoir ainsi choisi les pôles de la boucle fermée, on exprime $Po(q^{-1})$ et on résout l'équation :

$$So(q^{-1}).A(q^{-1}) + q^{-d}B(q^{-1}).Hr(q^{-1}).R'o(q^{-1}) = Po(q^{-1}) \qquad (14)$$

d'inconnue So et R'o.

Dans l'équation (14), Hr est un polynôme de préspécification du polynôme Ro :

$$R_o = Hr.R'_o$$

avec $Hr=(1+q^{-1})(1-q^{-1})$ de façon à ouvrir la boucle d'asservissement à la fréquence 0 et à la fréquence Fe/2.

On a ainsi obtenu le correcteur central.

On calcule ensuite les pôles du paramètre de Youla Q.

Pour chacune des vitesses de rotation fpert de la perturbation à rejeter, on choisit $\zeta_1$, $\zeta_2$ de l'équation (11), de telle sorte à régler la profondeur de l'atténuation de Syp à la dite fréquence, ainsi que la largeur de l'encoche à la fréquence fpert dans Syp.

On calcule Hs et $\alpha$ comme expliqué plus haut par discrétisation d'une cellule du second ordre et on résout l'équation de Bézout (9) afin de déterminer $\beta$.

Ce calcul aboutissant à la détermination de $\alpha$ et $\beta$ en fonction de fpert est effectué sur toute la plage de gamme de fréquence de la perturbation vibratoire que l'on est susceptible de rencontrer et que l'on entend rejeter. On peut par exemple calculer $\alpha$ et $\beta$ pour des fréquences de perturbation vibratoire variant de 2 Hz en 2 Hz lorsque la période d'échantillonnage est de l'ordre de 500Hz. On comprend que le choix du pas de vitesse, fixe ou différent selon la position dans la gamme considérée, peut être optimisé en fonction de la largeur de l'atténuation.

L'ensemble des coefficients de $\alpha$ et $\beta$ en fonction de fpert est ensuite mémorisé dans une table du calculateur.

Lorsque le calculateur fonctionne en temps réel, ces coefficients sont appelés en fonction de l'information sur la vitesse de rotation de la machine tournante, la fréquence de la perturbation vibratoire courante découlant de la valeur de la vitesse de rotation courante. A cette fin une mesure tachymétrique de l'axe de la machine tournante peut être effectuée. Pour des valeurs de fpert ne correspondant pas directement aux fréquences entrées dans la table, (fpert entre deux valeurs de la table), on peut procéder à une estimation des coefficients de $\alpha$ et $\beta$ en procédant à une interpolation entre deux valeurs connus, pourvu que le pas de maillage fréquentiel ne soit pas trop grand.

La loi de commande étant synthétisée, on peut vérifier la stabilité et le niveau de robustesse (marge de module >0,5) en simulation du système bouclé ainsi déterminé et calculé avec tentative de rejet de perturbation sur toute la gamme de fréquence considérée. Si les résultats du rejet ne sont pas acceptables, on revient sur la conception de la loi de commande en jouant sur les coefficients $\zeta_1$, $\zeta_2$ (profondeur et largeur fréquentielle du rejet).

Dans ce qui précède, on a considéré un système muni d'un seul capteur et soit d'un actionneur, soit d'un groupe d'actionneurs excités par le même signal de commande. Une telle configuration correspondait à un système appelé monovariable.

Dans la pratique, les machines tournantes sont supportées par plusieurs supports de fixation. Il est alors souhaitable de réduire l'intensité des vibrations de chacun des supports de fixation et de placer autant de capteurs qu'il y a de supports de fixation et de commander spécifiquement chacun des actionneurs ou groupes d'actionneurs de chaque support de fixation.

Ainsi, dans ce qui suit, on va considérer le problème où le système est équipé de plusieurs capteurs et de plusieurs actionneurs (ou plusieurs groupes d'actionneurs commandés par un même signal de commande).

Une première solution serait d'utiliser le schéma de commande précédemment établi pour le cas monovariable et de faire un rebouclage actionneur- capteur un à un. Cette solution risque de donner de très mauvais résultats, voire même une instabilité. En effet, un actionneur aura une influence sur tous les capteurs.

Du point de vue de l'automaticien, on se trouve en présence d'un problème multivariable (plusieurs entrées et plusieurs sorties couplées).

On peut schématiser et modéliser de tels systèmes multivariables et on donne sur la Figure 8, à titre d'exemple, un schéma du transfert sur un système 2*2 (2 actionneurs, 2 capteurs).

Dans cet exemple de la Figure 8, le capteur 1 est sensible aux effets mécaniques de l'actionneur 1 (AC1) et du actionneur 2 (AC2).

Ce système donné à titre d'exemple peut être modélisé par la matrice de fonctions de transfert suivante :

$$\begin{bmatrix} y1(t) \\ y2(t) \end{bmatrix} = \begin{bmatrix} H11 & H12 \\ H21 & H22 \end{bmatrix} \cdot \begin{bmatrix} u1(t) \\ u2(t) \end{bmatrix} \tag{15}$$

Soit encore, toujours dans le cas (2*2)

$$\begin{bmatrix} y1(t) \\ y2(t) \end{bmatrix} = \begin{bmatrix} \dfrac{B11(q^{-1})}{A11(q^{-1})} & \dfrac{B12(q^{-1})}{A12(q^{-1})} \\ \dfrac{B21(q^{-1})}{A21(q^{-1})} & \dfrac{B22(q^{-1})}{A22(q^{-1})} \end{bmatrix} \cdot \begin{bmatrix} u1(t) \\ u2(t) \end{bmatrix} \tag{16}$$

La représentation d'un système multivariable par fonction de transfert est en fait peu pratique, on lui préfère la représentation d'état, qui est une représentation universelle des systèmes linéaires (multivariables ou non).

Soit

nu : le nombre d'entrées du système (soit le nombre de actionneurs ou groupes de actionneurs reliés ensemble)
ny : le nombre de sorties du système (soit le nombre de capteurs)
n : l'ordre du système.

Dans ce qui suit on considère nu=ny bien que ce ne soit pas restrictif, tout ce qui suit pouvant s'appliquer au cas nu>ny.

La représentation d'état du système s'écrit :

$$X(t+Te) = G \cdot X(t) + H \cdot U(t)$$

$$Y(t) = W \cdot X(t) \tag{17}$$

$X$ : vecteur d'état du système de taille (n*1)
U : vecteur des entrées du système de taille (nu*1)
$Y$ : vecteur des sorties de taille (ny*1)
X(t) : signifie vecteur X à l'instant t
X(t+Te) : signifie vecteur X à l'instant t+Te (soit décalage d'une période d'échantillonnage Te).

Avec :

G dite matrice de transition de taille (n*n)
H matrice d'entrée du système de taille (n*nu)
W matrice de sortie du système de taille (ny*n)

Les coefficients des matrices G, H, W définissent le système linéaire multivariable.

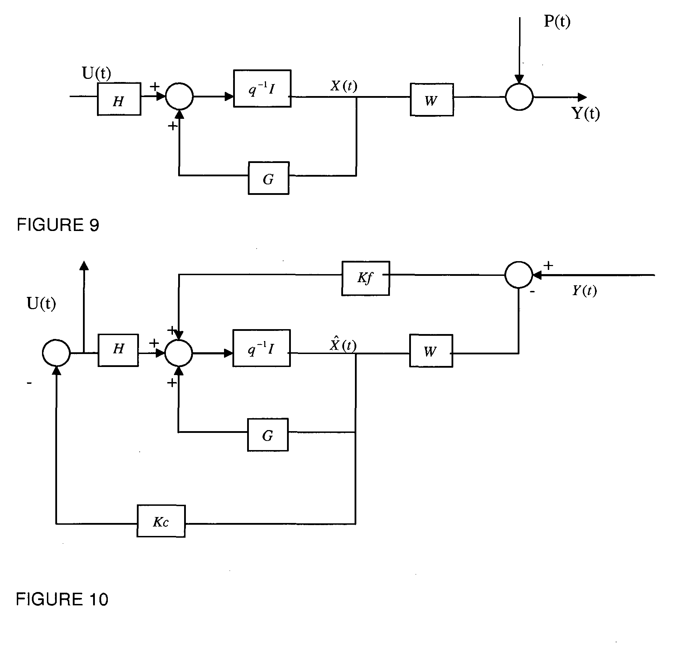

La loi de commande est basée sur cette représentation d'état, aussi faut-il disposer d'un modèle du système matériel (machine tournante, support de fixation, actionneurs, capteurs, montés sur la structure matérielle) à contrôler, c'est-à-dire les coefficients des matrices G, H, W. La représentation en schéma bloc du modèle du système matériel à commander est donnée sur la Figure 9.

On obtient ces coefficients par une procédure d'identification, c'est-à-dire par stimulation du système matériel avec des vibrations à spectre type bruit blanc ou s'en rapprochant, les nu actionneurs étant excités par des signaux décorrélés entre eux.

Les données obtenues au niveau des capteurs sont mémorisées et exploitées en vue d'obtenir une représentation d'état du système, en utilisant des algorithmes d'identification dédiés aux systèmes multivariables. Ces algorithmes sont par exemple fournis dans des boites à outils de logiciels spécialisés dans le domaine de l'automatique, ainsi que les moyens de validation du modèle.

On suppose que l'on a obtenu maintenant un modèle entrées-sorties du système sous forme de représentation d'état et que ce modèle a été validé. On doit maintenant synthétiser une loi de commande permettant de rejeter au niveau de chacun des capteurs une perturbation vibratoire, de fréquence fpert.

Pour ce faire, on va généraliser le concept de correcteur central et le concept de paramétrisation de Youla au cas multivariable sous forme d'état.

Soit le système décrit par la représentation d'état (17).

Le correcteur central se présente sous une forme observateur d'état + retour sur l'état estimé qui peut s'exprimer par :

$$\hat{X}(t + Te) = G \cdot \hat{X}(t) + H \cdot U(t) + Kf \cdot (Y(t) - W \cdot \hat{X}(t)) \qquad (18)$$

où :

$\hat{X}$ est le vecteur d'état de l'observateur de taille (n*1)
$Kf$ est le gain de l'observateur de taille (n*ny)

On a donc

$$\hat{X}(t + Te) = (G - Kf \cdot W) \cdot \hat{X}(t + Te) + H \cdot U(k) + Kf \cdot (Y(t + Te)) \qquad (19)$$

et la commande s'écrit :

$$U(t) = -Kc \cdot \hat{X}(t) \qquad (20)$$

$Kc$ étant le vecteur de retour sur l'état estimé du système de taille (nu*n).

La représentation en schéma bloc du correcteur central (observateur et retour d'état) est donnée sur la Figure 10.

Par analogie avec le cas monovariable, P est le vecteur des perturbations sur les sorties, soit :

$$P(t) = \begin{pmatrix} p_1(t) \\ \vdots \\ p_{ny}(t) \end{pmatrix}$$

$pi$ étant la perturbation sur la sortie i.

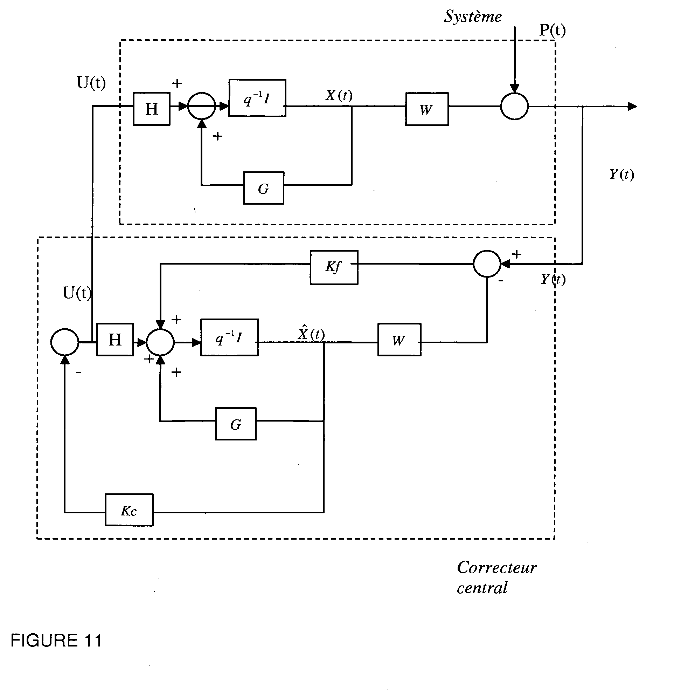

La représentation en schéma bloc du système muni du correcteur central est donnée sur la Figure 11.

Une telle structure de correction est classique en automatique. En vertu d'un principe nommé « principe de séparation », les pôles de la boucle fermée sont constitués des valeurs propres de $G - Kf \cdot W$ et des valeurs propres de $G - H \cdot Kc$, soit :

$$eig(G - Kf \cdot W) \cup eig(G - H \cdot Kc)$$

$eig(G - Kf \cdot W)$ sont nommés : pôles de filtrage et
$eig(G - H \cdot Kc)$ sont nommés : pôles de commande.

Ainsi le placement des pôles de la boucle fermée munie du correcteur central peut se faire en choisissant les coefficients de $Kf$ et $Kc$ qui sont les paramètres de réglage de cette structure de correction. Le nombre de pôles à placer est de 2*n.

On choisit donc comme correcteur central cet ensemble observateur et retour d'état estimé.

Dans le cas multivariable, on calcule $Kf$ par une stratégie par exemple basée sur optimisation quadratique, dite LQ, par exemple la stratégie « lqa » de Philippe de Larminat développée dans l'ouvrage précité.

Ainsi l'équation du correcteur central (calcul de récurrence) devient:

$$\hat{X}(t+Te) = (G - Kf.W) \cdot \hat{X}(t) + H \cdot U(t) + Kf.Y(t) \tag{22}$$

Il reste n pôles à placer (les pôles de commande $eig(G - H \cdot Kc)$). En suivant ce qui a été fait pour le correcteur monovariable, on choisira ces pôles comme un ensemble de pôles haute fréquence destinés à assurer la robustesse de la loi de commande. Afin de calculer $Kc$, on peut également se baser sur une optimisation quadratique, dite LQ, par exemple la stratégie « lqb » développée par Philippe de Larminat dans l'ouvrage précité.

Le correcteur central étant réglé, il reste à voir comment s'intègre le paramètre de Youla dans la loi de commande, l'objectif étant toujours de rejeter des perturbations sinusoïdales de fréquence connue fpert au niveau de chaque capteur, en faisant en sorte que seuls varient les coefficients du paramètre de Youla lorsque fpert varie.

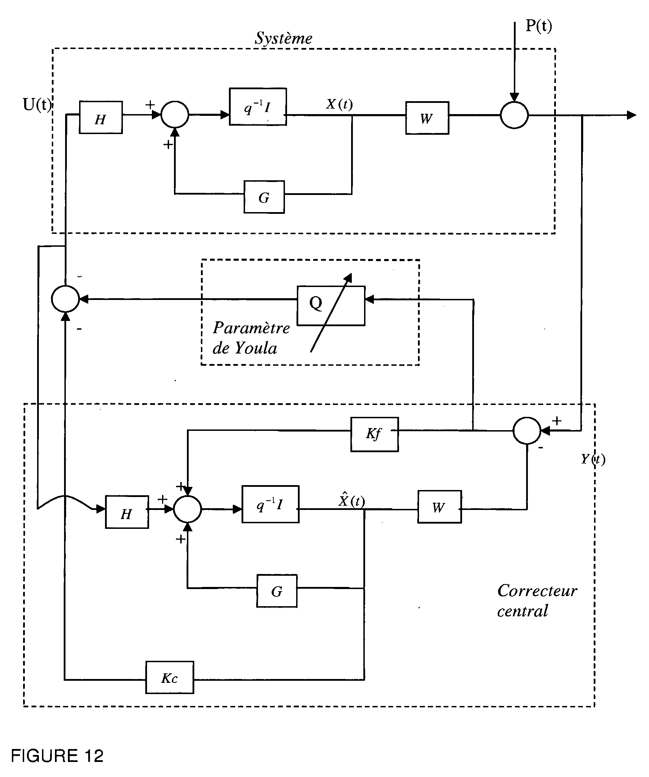

On montre que le paramètre de Youla s'incorpore dans la loi de commande tel que présenté dans le schéma de la Figure 12 (on peut par exemple se référer à l'article suivant : « From Youla-Kucera to identification, adaptive and nonlinear control », par Brian D.O. Anderson, Automatica, 1998).

Le paramètre de Youla, Q, est lui-même un bloc multivariable dont la représentation d'état peut s'écrire :

$$X_Q(t+Te) = A_Q X(t) + B_Q(Y(t) - W \cdot \hat{X}(t)) \tag{23}$$

La loi de commande s'écrivant alors :

$$U(t) = -K_c \cdot X(t) - C_Q \cdot X_Q(t) \tag{24}$$

Nous allons maintenant montrer comment déterminer et calculer les paramètres de Q de façon à assurer un rejet de perturbations vibratoire de fréquence connue. En effet, dans le cadre multivariable, on peut également exprimer le paramètre de Youla sous forme d'état, soit :

$$X_Q(t+Te) = A_Q \cdot X_Q(t) + B_Q \cdot (Y(t) - W \cdot \hat{X}(t)) \tag{25}$$

Ici $X_Q(t)$ est le vecteur d'état du paramètre de Youla à l'instant t.

Par ailleurs, on sait que la propriété fondamentale de la paramétrisation de Youla est que les pôles de la boucle fermée sont conservés par l'ajout du paramètre de Youla, pôles auxquels s'ajoutent les pôles du paramètre de Youla.

Ce qui veut dire que les pôles de la boucle fermée seront :

$$eig(G - Kf \cdot W) \cup eig(G - H \cdot Kc) \cup eig(A_Q)$$

On peut chercher à exprimer $A_Q$ telle qu'elle soit diagonale par blocs, par exemple de la forme

$$A_Q = \begin{bmatrix} -\alpha 1 & 1 & 0 & 0 & 0 \\ -\alpha 2 & 0 & 0 & 0 & 0 \\ 0 & 0 & -\alpha 1 & 1 & 0 \\ 0 & 0 & -\alpha 2 & 0 & 0 \\ 0 & 0 & 0 & 0 & \ddots \end{bmatrix} \tag{26}$$

C'est-à-dire que $A_Q$ est constituée de ny blocs $A_{QI} = \begin{bmatrix} -\alpha 1 & 1 \\ -\alpha 2 & 0 \end{bmatrix}$ mis en diagonale.

Il est alors clair que les valeurs propres de $A_Q$ sont les racines du polynôme $\alpha(q^{-1}) = 1 + \alpha_1.q^{-1} + \alpha_2.q^{-2}$ avec une multiplicité égale à ny.

On peut choisir :

$$C_Q = \begin{bmatrix} 1 & 0 & 0 & 0 & 0 \\ 0 & 0 & 1 & 0 & 0 \\ 0 & 0 & 0 & 0 & \ddots \end{bmatrix} \qquad (27)$$

C'est-à-dire que $C_Q$ est constituée de ny blocs $C_{Ql}$ = [1 0] mis en diagonale.

Et enfin, la matrice $B_Q$ est de taille 2*ny*ny.

Reste donc à déterminer les coefficients de $B_Q$.

En s'appuyant sur la publication « From Youla-Kucera to identification, adaptive and nonlinear control » précitée, et en posant :

$$Q(z) = C_Q \big(z \cdot I - A_Q\big)^{-1} B_Q \qquad (28)$$

*I*, matrice unité et z, la variable de la transformée en Z,

$$
\begin{aligned}
XX(z) &= K_c \cdot \big(zI - G + H \cdot Kc\big)^{-1} \cdot Kf \\
YY(z) &= W \cdot \big(zI - G + H \cdot Kc\big)^{-1} \cdot Kf \\
NN(z) &= W \cdot \big(zI - G + H \cdot Kc\big)^{-1} \cdot H \\
DD(z) &= -Kc \cdot \big(zI - G + H \cdot Kc\big)^{-1} \cdot H
\end{aligned}
\qquad (29)
$$

On a la relation :

$$U(t) = -\big[XX(z) + DD(z) \cdot Q(z)\big] \cdot \big[YY(z) - NN(z) \cdot Q(z)\big]^{-1} \cdot Y(t) \quad (30)$$

Suivant le principe de modèle interne de Wonham (voir par exemple « The internal model principle for linear multivariate regulators » de B.A Francis et W.M. Wonham in Applied mathematics and optimization, volume2, n°2), il apparaît que le rejet théoriquement parfait d'une perturbation sera obtenu à la fréquence fpert si à cette fréquence, le gain de boucle ouverte est infini, c'est-à-dire, puisque z = $e^{j \cdot 2p \cdot fpert \cdot Te}$ que:

$$YY\big(e^{j \cdot 2pi \cdot fpert \cdot Te}\big) - NN\big(e^{j \cdot 2pi \cdot fpert \cdot Te}\big) \cdot Q\big(e^{j \cdot 2pi \cdot fpert \cdot Te}\big) = 0_{nu*ny} \qquad (31)$$

Mais $Q(z)$ est décomposable en deux parties :

$$Q(z) = Q_1(z) \cdot B_Q \qquad (32)$$

Ce caractère affine des coefficients de $B_Q$ dans l'équation (32) permet ainsi une résolution aisée. Pour cela, il suffit d'exprimer les équations suivantes en effectuant une séparation entre les parties réelle et imaginaire de l'équation (31), soit :

$$\mathrm{Re}\left(YY\left(e^{j\cdot 2\,pi\cdot fpert\cdot Te}\right)\right) - \mathrm{Re}\left(NN\left(e^{j\cdot 2\,pi\cdot fpert\cdot Te}\right)\cdot Q_1\left(e^{j\cdot 2\,pi\cdot fpert\cdot Te}\right)\right)\cdot B_Q = 0_{nu*ny}$$

$$\mathrm{Im}\left(YY\left(e^{j\cdot 2\,pi\cdot fpert\cdot Te}\right)\right) - \mathrm{Im}\left(NN\left(e^{j\cdot 2\,pi\cdot fpert\cdot Te}\right)\cdot Q_1\left(e^{j\cdot 2\,pi\cdot fpert\cdot Te}\right)\right)\cdot B_Q = 0_{nu*ny} \tag{33}$$

On se trouve alors devant la résolution d'un système linéaire dont le nombre d'équations est 2*ny, ce qui est exactement le nombre de coefficients de $B_Q$. La résolution de ce système linéaire est alors aisée et permet d'obtenir les valeurs des coefficients du bloc paramètre de Youla qui donnent un rejet théoriquement parfait.

Cependant, il est préférable que dans certains cas, le rejet de la perturbation ne soit pas théoriquement parfait. On peut ainsi par exemple calculer les coefficients de $B_Q$ en résolvant le système d'équations :

$$\mathrm{Re}\left(YY(z_1)\right) - \mathrm{Re}\left(NN(z_1)\cdot Q_1(z_1)\right)\cdot B_Q = 0_{nu*ny}$$

$$\mathrm{Im}\left(YY(z_1)\right) - \mathrm{Im}\left(NN(z_1)\cdot Q_1(z_1)\right)\cdot B_Q = 0_{nu*ny} \tag{34}$$

Où $z_1$ est l'une au choix des deux racines du polynôme $\beta(z) = z^2 + \delta_1.z + \delta_2$ les coefficients $\delta_1$, $\delta_2$ de même que $\alpha_1, \alpha2$ peuvent être déterminés à partir de la fonction de transfert $\dfrac{1+\delta_1\cdot q^{-1}+\delta_2\cdot q^{-2}}{1+\alpha_1\cdot q^{-1}+\alpha_2\cdot q^{-2}}$ résultant de la discrétisation d'une cellule du second ordre identique à celle utilisées dans le cas monovariable :

$$\dfrac{\dfrac{s^2}{(2\pi.fpert)^2}+\dfrac{\varsigma_1.s}{(2\pi.fpert)}+1}{\dfrac{s^2}{(2\pi.fpert)^2}+\dfrac{\varsigma_2.s}{(2\pi.fpert)}+1} \tag{35}$$

Tout comme dans le cas monovariable, $\zeta_1$ détermine la profondeur des encoches de rejection dans Syp, et une fois cette valeur fixée, le choix de $\zeta_2$ permet de régler la largeur desdites encoches.

Ainsi, dans une étape préalable, les coefficients de $A_Q$, $B_Q$, $C_Q$ peuvent être calculés lors du réglage de la loi de commande, pour chaque fréquence de perturbation, et mis dans des tables, afin d'être appelés en fonction de fpert sur le calculateur temps réel pour rejet en temps réel de la perturbation vibratoire.

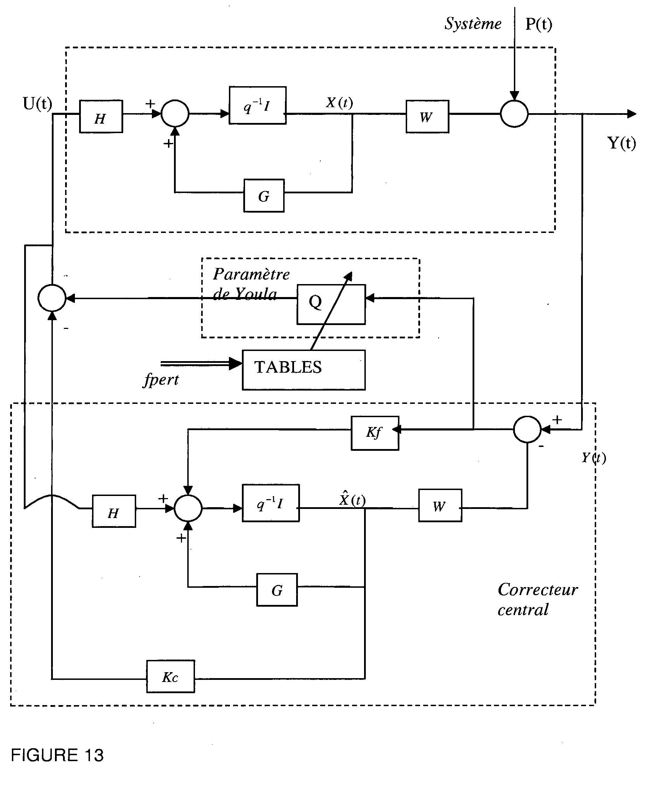

La structure de la loi de commande à mettre en oeuvre pour le rejet en temps réel de la perturbation vibratoire est représentée sur la Figure 13.

Les paramètres de réglage de la loi de commande résident dans le choix des pôles du système bouclé par le correcteur central seul (par les paramètres de Kc et de Kf qui ont une influence sur la robustesse de la loi de commande). Pour chaque fréquence, on dispose du choix des $\zeta_1,\zeta_2$ des cellules du second ordre continues, influençant les largeurs fréquentielles et profondeur des rejets des perturbation à la fréquence fpert.

Ces possibilités de réglage généralisent les possibilités de réglage du cas mono variable.

Pour résumer, la loi de commande multivariable s'obtient en effectuant les opérations suivantes au cours d'une étape préalable :

- Obtention d'un modèle linéaire multivariable sous forme de représentation d'état, par stimulation et identification.
- Synthèse d'un correcteur central sous forme observateur d'état et retour d'état estimé. Les gains Kc et Kf étant par exemple calculés par optimisation quadratique.
- Choix des $\zeta_1,\zeta_2$ pour un maillage de fréquences de perturbation à rejeter.
- Calcul les coefficients du paramètre de Youla qui sont mis dans des tables du calculateur temps-réel.

Ensuite, la loi de commande multivariable ainsi obtenue et calculée peut être mise en oeuvre en temps réel dans un calculateur pour commander des effecteurs, les calculs temps réels étant effectués en fonction de la fréquence de la perturbation vibratoire, cette dernière étant obtenue directement ou indirectement à partir de la vitesse de rotation de la machine tournante.

On comprend que l'invention concerne aussi un calculateur ou des moyens matériels de programmation spécialement configurés pour l'exécution du procédé d'atténuation de perturbations vibratoires mécaniques.

Dans les explications qui ont été données jusqu'à présent, on a considéré le rejet d'une fréquence à la fois pour des raisons de simplification. Toutefois, l'invention permet le rejet de plusieurs fréquences de perturbation vibratoire à la fois, chacune étant essentiellement monofréquentielle, donc à bande étroite. Ainsi, que ce soit dans le cas monovariable ou dans le cas multivariable, il est possible de rejeter simultanément plus d'une fréquence. Cela conduit à introduire une seconde voire une troisième encoche dans la fonction de sensibilité Syp. Cependant, il ne faut pas perdre de vue que compte tenu du théorème de Bode freudenberg Looze, la réalisation d'une ou plusieurs encoches supplémentaires dans la fonction de sensibilité entraîne nécessairement une remontée de|Syp| aux autres fréquences d'où un amoindrissement de la robustesse.

Dans ce qui suit on va supposer que l'on rejette deux fréquences, mais ceci n'est pas limitatif et est donné uniquement à titre d'exemple. Ces deux fréquences sont :

- la fréquence courante fpert (pour reprendre les notations utilisées ci-dessus),
- une seconde fréquence proportionnelle à fpert que l'on notera $\eta$.fpert, $\eta$ étant constant mais pas nécessairement entier.

Dans le cas monovariable, on a toujours l'équation de Bézout (9) soit :

$$S'(q^{-1}).Hs(q^{-1}) + q^{-d}B(q^{-1})\beta(q^{-1}) = So(q^{-1}).\alpha(q^{-1})$$

dont les inconnues sont toujours $S'(q^{-1})$ et $\beta(q^{-1})$, mais cette fois-ci $Hs$ et $\alpha$ sont tels que la fonction de transfert $\dfrac{Hs(q^{-1})}{\alpha(q^{-1})}$ résulte de la discrétisation d'un bloc continu par la méthode de Tustin constitué d'un produit de deux cellules du second ordre continues :

$$\frac{\dfrac{s^2}{(2\pi.fpert)^2} + \dfrac{2 \cdot \varsigma_{11}.s}{(2\pi.fpert)} + 1 \cdot \dfrac{s^2}{(2\pi.\eta \cdot fpert)^2} + \dfrac{2 \cdot \varsigma_{12}.s}{(2\pi.\eta \cdot fpert)} + 1}{\dfrac{s^2}{(2\pi.fpert)^2} + \dfrac{2 \cdot \varsigma_{21}.s}{(2\pi.fpert)} + 1 \cdot \dfrac{s^2}{(2\pi.\eta \cdot fpert)^2} + \dfrac{2 \cdot \varsigma_{22}.s}{(2\pi.\eta \cdot fpert)} + 1}$$

$Hs$ et $\alpha$ sont ici des polynômes en $q^{-1}$ de degré 4 et $\zeta_{11}$ $\zeta_{12}$ $\zeta_{21}$ $\zeta_{22}$ sont des facteurs d'amortissement permettant tout comme dans le cas du rejet monofréquentiel de régler la largeur et la profondeur de l'encoche d'atténuation dans la courbe représentative du module de Syp.

Ici, $\alpha(q^{-1})$ est un polynôme d'ordre 4 et $\beta(q^{-1})$ un polynôme d'ordre 3. Le nombre de coefficient variables dans la loi de commande est donc plus élevé : il y a 4 coefficients supplémentaires à faire varier en fonction de fpert. La résolution d'un tel système s'opère d'une manière équivalente à ce qui a été présenté dans le cas d'une seule fréquence.

Dans le cas multivariable, on peut chercher à exprimer $A_Q$ telle qu'elle soit diagonale par blocs, par exemple de la forme

$$A_Q = \begin{bmatrix} A_{QI} & 0_{4,4} & 0_{4,4} \\ 0_{4,4} & A_{QI} & 0_{4,4} \\ 0_{4,4} & 0_{4,4} & \ddots \end{bmatrix}$$

C'est-à-dire que $A_Q$ est constituée de ny blocs $A_{QI} = \begin{bmatrix} -\alpha_1 & 1 & 0 & 0 \\ -\alpha_2 & 0 & 0 & 0 \\ 0 & 0 & -\alpha_3 & 1 \\ 0 & 0 & -\alpha_4 & 0 \end{bmatrix}$ mis en diagonale.

Il est alors clair que les valeurs propres de $A_Q$ sont les racines du polynôme $\alpha(q^{-1})=(1+\alpha_1 \cdot q^{-1}+\alpha_2 \cdot q^{-2})\cdot(1+\alpha_3 \cdot q^{-2}+\alpha_4 \cdot q^{-2})$ avec une multiplicité égale à ny.

On peut choisir :

$$C_Q = \begin{bmatrix} C_{QI} & 0_{1,4} & 0_{1,4} \\ 0_{1,4} & C_{QI} & 0_{1,4} \\ 0_{1,4} & 0_{1,4} & \ddots \end{bmatrix}$$

C'est-à-dire que $C_Q$ est constituée de ny blocs $C_{QI}$ = [1 0 1 0] mis en diagonale.

Et enfin, la matrice $B_Q$ est de taille 4*ny*ny.

Reste donc à déterminer les coefficients de $B_Q$.

On a maintenant :

$$Q(z) = C_Q \bigl(z \cdot I - A_Q\bigr)^{-1} B_Q$$

Les inconnues du problème sont maintenant les 4*ny*ny coefficients de $B_Q$ que l'on détermine à l'aide des équations 31 à 35 vues précédemment.

Ce que l'on vient de décrire pour un nombre de fréquences simultanément rejetées égal à 2 peut être étendu à un nombre de fréquences plus élevées, cependant, comme dit plus haut, l'augmentation du nombre de fréquences rejetées entraîne une perte de robustesse pouvant devenir vite rédhibitoire.

**Revendications**

1. Procédé de contrôle actif de vibrations mécaniques par mise en oeuvre d'une loi de contrôle constituée d'un correcteur central et d'un paramètre de Youla permettant l'atténuation de perturbations vibratoires mécaniques essentiellement monofréquentielles créées dans une structure matérielle (5) d'un système matériel par au moins une machine tournante (1) fixée par un support (2) à ladite structure matérielle et tournant à une vitesse de rotation déterminable, la fréquence de la perturbation vibratoire étant liée à la vitesse de rotation de la machine tournante et variant en fonction des variations de ladite vitesse de rotation, au moins un actionneur (3) mécanique étant disposé entre la machine tournante et la structure matérielle, ainsi qu'au moins un capteur (4) de vibration produisant des signaux y(t) ou Y(t) selon un cas monovariable ou multivariable respectivement, l'utilisation d'un capteur correspondant à un cas monovariable et l'utilisation de plusieurs capteurs correspondant à un cas multivariable, le/les actionneurs pouvant être en série, dans le support, ou en parallèle du support, le/les capteurs étant reliés à un au moins calculateur commandant le/les actionneurs, le calculateur comportant des moyens de calcul de correction produisant des signaux de commande u(t) ou U(t) selon le cas monovariable ou multivariable respectivement pour le/les actionneurs en fonction, d'une part de mesures du/des capteurs et, d'autre part, d'un paramètre de fréquence de perturbation vibratoire, les moyens de calculs étant configurés selon une loi de commande de correction correspondant à une modélisation par blocs du système, lesdits blocs étant, d'une part, ceux du correcteur central et, d'autre part, un bloc de paramètre de Youla, la modélisation étant telle que seul le paramètre de Youla ait des coefficients dépendant de la fréquence de perturbation vibratoire dans ladite loi de commande de correction, le correcteur central ayant des coefficients fixes, **caractérisé en ce que** le paramètre de Youla est sous forme d'un filtre à réponse impulsionnelle infinie, et lors d'une phase préalable de conception on détermine et calcule, d'une part, des paramètres d'un modèle de la partie du système matériel comportant le/les actionneurs, support(s) et capteur(s) par stimulation de/des actionneurs et mesures par le/les capteurs et, d'autre part, la loi de commande de correction en fonction de fréquences déterminées de perturbations vibratoires, et on stocke dans une mémoire du calculateur au moins les coefficients variables du paramètre de Youla, de préférence dans une table, et lors d'une phase d'utilisation, en temps réel :

- on détermine la fréquence de la perturbation vibratoire courante,
- on calcule la loi de commande de correction, comprenant le correcteur central avec le paramètre de Youla, avec le calculateur en utilisant pour le paramètre de Youla les coefficients mémorisés d'une fréquence de perturbation déterminée correspondant à la fréquence de perturbation courante.

2. Procédé selon la revendication 1, **caractérisé en ce que**, dans le cas monovariable, dans la phase de conception :

a) - dans un premier temps, on utilise un modèle linéaire du système matériel sous forme d'une fonction de transfert rationnelle discrète, et on détermine et calcule ladite fonction de transfert par stimulation du système matériel par les le(s) actionneur(s) et mesures par le capteur puis application d'un procédé d'identification de système linéaire avec les mesures et le modèle,

b) - dans un deuxième temps, on met en oeuvre un correcteur central appliqué au modèle du système matériel déterminé et calculé au premier temps, le correcteur central étant sous forme d'un correcteur RS de deux blocs $1/So(q^{-1})$ et $Ro(q^{-1})$, dans le correcteur central, le bloc $1/So(q^{-1})$ produisant le signal u(t) et recevant en entrée le signal de sortie inversé du bloc $Ro(q^{-1})$, ledit bloc $Ro(q^{-1})$ recevant en entrée le signal y(t) correspondant à la sommation de la perturbation vibratoire p(t) et de la sortie de la fonction de transfert du modèle du système matériel, et on détermine et calcule le correcteur central,

c) - dans un troisième temps, on adjoint un paramètre de Youla au correcteur central pour former la loi de commande de correction, le paramètre de Youla étant sous forme d'un bloc Q(q-1), filtre à réponse impulsionnelle infinie, avec $Q(q^{-1}) = \dfrac{\beta(q^{-1})}{\alpha(q^{-1})}$, $\alpha$, $\beta$ étant des polynômes en $q^{-1}$, adjoint au correcteur central RS, ledit bloc Q(q-1) de Youla recevant une estimation de perturbation obtenue par calcul à partir des signaux u(t) et y(t) et en fonction de la fonction de transfert du modèle du système matériel et le signal en sortie dudit bloc $Q(q^{-1})$ de Youla étant soustrait au signal inversé de $Ro(q^{-1})$ envoyé à l'entrée du bloc $1/So(q^{-1})$ du correcteur central RS, et on détermine et calcule le paramètre de Youla dans la loi de commande de correction comportant le correcteur central auquel est associé le paramètre de Youla pour au moins une fréquence de perturbation vibratoire p(t) dont au moins la fréquence déterminée de la perturbation vibratoire à atténuer,

et **en ce que** dans la phase d'utilisation, en temps réel :

- on détermine la fréquence courante de la perturbation vibratoire à atténuer,
- on fait calculer au calculateur la loi de commande de correction, comprenant le correcteur RS avec le paramètre de Youla, en utilisant, pour le paramètre de Youla les coefficients qui ont été calculés pour une fréquence de perturbation vibratoire correspondant à la fréquence courante de perturbation vibratoire à atténuer, les coefficients de $Ro(q^{-1})$ et $So(q^{-1})$ étant fixes.

3. Procédé selon la revendication 2, **caractérisé en ce que**, dans la phase de conception, on effectue les opérations suivantes :

a) - dans le premier temps, on excite le système matériel en appliquant au(x) actionneurs(s) un signal d'excitation dont la densité spectrale est sensiblement uniforme sur une bande de fréquence utile,

b) - dans le deuxième temps, on détermine et calcule les polynômes $Ro(q^{-1})$ et $So(q^{-1})$ du correcteur central de manière à ce que ledit correcteur central soit équivalent à un correcteur calculé par placement des pôles de la boucle fermée dans l'application du correcteur central à la fonction de transfert du modèle du système matériel, ,

c) - dans le troisième temps, on détermine et calcule les numérateur et dénominateur du bloc $Q(q^{-1})$ de Youla au sein de la loi de commande de correction pour au moins une fréquence de perturbation vibratoire p(t) dont au moins la fréquence déterminée de perturbation vibratoire à atténuer, ceci en fonction d'un critère d'atténuation, le bloc $Q(q^{-1})$ étant exprimé sous forme d'un rapport ß(q-1)/α(q-1), α, β étant des polynômes en $q^{-1}$, afin d'obtenir des valeurs de coefficients des polynômes α(q-1) et ß(q-1) pour la/chacune des fréquences, le calcul de ß(q-1) et α(q-1) se faisant par l'obtention d'une fonction de transfert discrète Hs(q-1)/α(q-1) résultant de la discrétisation d'une cellule du second ordre continu, le polynôme ß(q-1) se calculant par la résolution d'une équation de Bézout,

et **en ce que** dans la phase d'utilisation, en temps réel, on effectue les opérations suivantes :

- on détermine la fréquence courante de la perturbation vibratoire à atténuer,
- on fait calculer au calculateur la loi de commande de correction, correcteur central à coefficients fixes avec paramètre de Youla à coefficients variables, pour produire le signal u(t) envoyé au/aux actionneurs, en fonction des mesures y(t) du capteur et en utilisant pour le bloc $Q(q^{-1})$ de Youla les valeurs des coefficients des polynômes $\alpha(q^{-1})$ et $\beta(q^{-1})$ déterminées et calculées pour une fréquence déterminée correspondant à la fréquence courante.

4. Procédé selon la revendication 2 ou 3, **caractérisé en ce que** l'on utilise pour le modèle du système matériel une fonction de transfert de la forme :

$$\frac{y(t)}{u(t)} = \frac{q^{-d}B(q^{-1})}{A(q^{-1})}$$

où d est le nombre de périodes d'échantillonnage de retard du système, B et A sont des polynômes en $q^{-1}$ de la forme :

$$B(q^{-1}) = b_0 + b_1 \cdot q^{-1} + \cdots b_{nb} \cdot q^{-nb}$$

$$A(q^{-1}) = 1 + a_1 \cdot q^{-1} + \cdots a_{na} \cdot q^{-na}$$

les $b_i$ et $a_i$ étant des scalaires, et $q^{-1}$ étant l'opérateur retard d'une période d'échantillonnage, et **en ce que** le calcul de l'estimation de perturbation vibratoire est obtenu par application de la fonction $q^{-d}B(q^{-1})$ à u(t) et soustraction du résultat à l'application de y(t) à la fonction $Ai(q^{-1})$.

5. Procédé selon la revendication 2, 3 ou 4, **caractérisé en ce que** pour le temps b), on détermine et calcule les polynômes $Ro(q^{-1})$ et $So(q^{-1})$ du correcteur central par une méthode de placement des pôles de la boucle fermée.

6. Procédé selon la revendication 1, **caractérisé en ce que**, dans le cas mono et multivariable, dans la phase de conception :

a) - dans un premier temps, on utilise un modèle linéaire du système matériel sous forme de représentation d'état de blocs matriciels H, W, G et $q^{-1}$.I, G étant une matrice de transition, H étant une matrice d'entrée, W étant une matrice de sortie et I la matrice identité, ladite représentation d'état pouvant s'exprimer par une équation de récurrence :

$$X(t + Te) = G \cdot X(t) + H \cdot U(t)$$

$$Y(t) = W \cdot X(t)$$

avec $X(t)$ : vecteur d'état, $U(t)$ : vecteur des entrées, $Y(t)$ : vecteur des sorties,
et on détermine et calcule ledit modèle du système matériel par stimulation du système matériel par le(s) actionneur(s) et mesures par les capteurs puis application d'un procédé d'identification de système linéaire avec les mesures et le modèle,
b) - dans un deuxième temps, on met en oeuvre un correcteur central appliqué au modèle du système matériel déterminé et calculé au premier temps, le correcteur central étant sous forme observateur d'état et retour d'état estimé qui exprime $\hat{X}$ un vecteur d'état de l'observateur itérativement en fonction de $Kf$ un gain de l'observateur, $Kc$ un vecteur de retour sur l'état estimé, ainsi que du modèle du système matériel déterminé et calculé au premier temps, soit :

$$\hat{X}(t + Te) = (G - Kf \cdot W) \cdot \hat{X}(t + Te) + H \cdot U(k) + Kf \cdot (Y(t + Te))$$

avec une commande $U(t) = -K_c \cdot \hat{X}(t)$,

et on détermine et calcule ledit correcteur central,

c) - dans un troisième temps, on adjoint un paramètre de Youla au correcteur central pour former la loi de commande de correction, le paramètre de Youla étant sous forme d'un bloc Q mono ou multivariable, de matrices d'état $A_Q$, $B_Q$, $C_Q$, adjoint au correcteur central exprimé également sous forme de représentation d'état, bloc $Q$ dont la sortie soustraite à la sortie du correcteur central produit le signal U(t) et dont l'entrée reçoit le signal Y(t) auquel est soustrait le signal $W \cdot \hat{X}(t)$, et on détermine et calcule le paramètre de Youla dans la loi de commande de correction comportant le correcteur central auquel est associé le paramètre de Youla pour au moins une fréquence de perturbation vibratoire P(t) dont au moins la fréquence déterminée de perturbation vibratoire à atténuer,

et **en ce que** dans la phase d'utilisation, en temps réel :

- on détermine la fréquence courante de la perturbation vibratoire à atténuer,
- on fait calculer au calculateur la loi de commande de correction, comprenant le correcteur central à coefficients fixes avec le paramètre de Youla à coefficients variables, en utilisant, pour le paramètre de Youla les coefficients qui ont été calculés pour une fréquence de perturbation vibratoire correspondant à la fréquence courante de perturbation vibratoire à atténuer.

7. Procédé selon la revendication 6, **caractérisé en ce que**, dans la phase de conception, on effectue les opérations suivantes :

a) - dans le premier temps, on excite le système matériel en appliquant aux actionneurs des signaux d'excitation dont la densité spectrale est sensiblement uniforme sur une bande de fréquence utile, les signaux d'excitation étant décorrélés entre-eux,

b) - dans le deuxième temps, on détermine et calcule le correcteur central de manière à ce qu'il soit équivalent à un correcteur avec observateur d'état et retour sur l'état, *Kf* étant obtenu par optimisation quadratique (LQ), et le gain de retour d'état *Kc* choisi de façon à assurer la robustesse de la loi de commande munie du paramètre de Youla, au moyen d'une optimisation quadratique (LQ),

c) - dans le troisième temps, on détermine et calcule les coefficients du bloc $Q$ de Youla au sein de la loi de commande de correction pour au moins une fréquence de perturbation vibratoire P(t) dont au moins la fréquence déterminée de perturbation vibratoire à atténuer en fonction d'un critère d'atténuation, afin d'obtenir des valeurs de coefficients du paramètre de Youla pour la/chacune des fréquences,

et **en ce que** dans la phase d'utilisation, en temps réel, on effectue les opérations suivantes :

- on détermine la fréquence courante de la perturbation vibratoire à atténuer,
- on fait calculer au calculateur la loi de commande de correction, correcteur central à coefficients fixes avec paramètre de Youla à coefficients variables, pour produire le signal U(t) envoyé aux actionneurs, en fonction des mesures Y(t) des capteurs et en utilisant pour le paramètre de Youla les valeurs des coefficients déterminées et calculées pour une fréquence déterminée correspondant à la fréquence courante.

8. Procédé selon l'une quelconque des revendications 2 à 7, **caractérisé en ce qu'**il est adapté à un ensemble de fréquences déterminées de perturbations vibratoires à atténuer et on répète le temps c) pour chacune des fréquences déterminées et **en ce que**, en phase d'utilisation lorsque aucune des fréquences déterminées ne correspond à la fréquence courante du perturbation vibratoire à atténuer, on fait une interpolation à ladite fréquence courante pour les valeurs des coefficients du bloc $Q$ de Youla à partir des valeurs de coefficients dudit bloc $Q$ de Youla connus pour les fréquences déterminées.

9. Procédé selon l'une quelconque des revendications 2 à 8, **caractérisé en ce que** les signaux sont échantillonnés à une fréquence Fe et au temps a) on utilise une bande de fréquence utile du signal d'excitation qui est sensiblement [0, Fe/2].

10. Procédé selon l'une quelconque des revendications 2 à 9, **caractérisé en ce que** avant la phase d'utilisation, on ajoute à la phase de conception un quatrième temps d) de vérification de la stabilité et de la robustesse du modèle du système matériel et de la loi de commande de correction, correcteur central avec paramètre de Youla, obtenus précédemment aux temps a) à c) en faisant une simulation de la loi de commande de correction obtenue aux temps b) et c) appliqué au modèle du système matériel obtenu au temps a) pour la/les fréquences déterminées et lorsque un critère prédéterminé de stabilité et/ou robustesse n'est pas respecté, on réitère au moins le temps c) en modifiant le critère d'atténuation.

**11.** Procédé selon l'une quelconque des revendications précédentes, **caractérisé en ce que** la phase de conception est une phase préalable et elle est effectuée une fois, préalablement à la phase d'utilisation, avec mémorisation des résultats des déterminations et calculs pour utilisation dans la phase d'utilisation.

**12.** Procédé selon l'une quelconque des revendications précédentes, **caractérisé en ce que** la fréquence courante de la perturbation vibratoire à atténuer est déterminée à partir de la mesure de la vitesse de rotation de la machine tournante.

**13.** Procédé selon l'une quelconque des revendications précédentes, **caractérisé en ce que** le système matériel est un aéronef et la machine tournante est un moteur d'aéronef.

**14.** Dispositif comportant des moyens de contrôle actif de vibrations mécaniques par mise en oeuvre d'une loi de contrôle constituée d'un correcteur central et d'un paramètre de Youla dans un calculateur dudit dispositif permettant la mise en oeuvre du procédé de l'une quelconque des revendications précédentes d'atténuation de perturbations vibratoires mécaniques essentiellement monofréquentielles créées dans une structure matérielle d'un système matériel par au moins une machine tournante fixée par un support à ladite structure matérielle et tournant à une vitesse de rotation déterminable, la fréquence de la perturbation vibratoire étant liée à la vitesse de rotation de la machine tournante et variant en fonction des variations de ladite vitesse de rotation, le dispositif comportant en outre au moins un actionneur mécanique disposé entre la machine tournante et la structure matérielle, ainsi qu'au moins un capteur de vibration produisant des signaux y(t) ou Y(t) selon un cas monovariable ou multivariable respectivement, l'utilisation d'un capteur correspondant à un cas monovariable et l'utilisation de plusieurs capteurs correspondant à un cas multivariable, le/les actionneurs pouvant être en série, dans le support, ou en parallèle du support, le/les capteurs étant reliés au calculateur commandant le/les actionneurs, le calculateur comportant des moyens de calcul de correction produisant des signaux de commande u(t) ou U(t) selon le cas monovariable ou multivariable respectivement pour le/les actionneurs en fonction, d'une part de mesures du/des capteurs et, d'autre part, d'un paramètre de fréquence de perturbation vibratoire, le calculateur comportant des moyens de calculs configurés selon une loi de commande de correction correspondant à une modélisation par blocs du système, lesdits blocs étant, d'une part, ceux du correcteur central et, d'autre part, un bloc de paramètre de Youla, la modélisation étant telle que seul le paramètre de Youla ait des coefficients dépendant de la fréquence de perturbation vibratoire dans ladite loi de commande de correction, le correcteur central ayant des coefficients fixes, le paramètre de Youla étant sous forme d'un filtre à réponse impulsionnelle infinie, lors d'une phase préalable de conception, ayant été déterminés et calculés, d'une part, des paramètres d'un modèle de la partie du système matériel comportant le/les actionneurs, support(s) et capteur(s) par stimulation de/des actionneurs et mesures par le/les capteurs et, d'autre part, la loi de commande de correction en fonction de fréquences déterminées de perturbations vibratoires, et on stocke dans une mémoire du calculateur au moins les coefficients variables du paramètre de Youla, de préférence dans une table, le dispositif permettant lors d'une phase d'utilisation, en temps réel, la détermination de la fréquence de la perturbation vibratoire courante et le calcul de la loi de commande de correction, comprenant le correcteur central avec le paramètre de Youla, avec le calculateur en utilisant pour le paramètre de Youla les coefficients mémorisés d'une fréquence de perturbation déterminée correspondant à la fréquence de perturbation courante.

**15.** Dispositif selon la revendication 14, **caractérisé en ce que** le calculateur permet en outre, lors de la phase préalable de conception, la détermination et le calcul des paramètres du modèle et la loi de commande de correction.

**Patentansprüche**

**1.** Verfahren zur aktiven Steuerung von mechanischen Schwingungen mittels Implementierung einer Steuerung aus einem zentralen Korrektor und einem Youla-Parameter, das eine Dämpfung mechanischer, im Wesentlichen monofrequenter Schwingungsstörungen ermöglicht, die in einer materiellen Struktur (5) eines materiellen Systems durch wenigstens eine drehende, mittels eines Sockels (2) an der materiellen Struktur befestigte und mit einer bestimmbaren Drehgeschwindigkeit drehende Maschine (1) erzeugt werden, wobei die Frequenz der Schwingungsstörung mit der Drehgeschwindigkeit der drehenden Maschine zusammenhängt und sich in Abhängigkeit von den Änderungen der Drehgeschwindigkeit ändert, wobei wenigstens ein mechanisches Betätigungsorgan (3) zwischen der drehenden Maschine und der materiellen Struktur angeordnet ist und wenigstens ein Schwingungssensor (4) je nach monovariablem oder multivariablem Fall Signale y(t) oder Y(t) erzeugt, wobei die Verwendung eines Sensors einem monovariablem Fall entspricht und die Verwendung mehrerer Sensoren einem multivariablem Fall entspricht, wobei der (oder die) Sensor(en) im Sockel in Reihe oder parallel zum Sockel sein kann (können), wobei der (oder die) Sensor(en) an einen oder mehrere das (bzw. die) Betätigungsorgan(e) steuernde Rechner angeschlossen ist (sind), wobei der Rechner Mittel zum Berechnen einer Korrektur aufweist, die für das (die) Betätigungsorgan(e) je nach monovariablem oder multivariablem Fall Steuersignale u(t) oder U(t) in Abhängigkeit von Messungen des Sensors bzw. der Sensoren einerseits und eines Schwingungsstörungsfrequenzparameters andererseits erzeugen, wobei die Rechenmittel gemäß einer Korrektursteuerungsregel ausgebildet sind, die einem Blockmodell des Systems entspricht, wobei die Blöcke einerseits jene des zentralen Korrektors und andererseits ein Youla-Parameterblock sind, wobei das Modell derart ausgelegt ist, daß in der Korrektursteuerungsregel nur der Youla-Parameter von der Schwingungsstörungsfrequenz abhängige Koeffizienten aufweist, während der zentrale Korrektor feste Koeffizienten aufweist,

dadurch gekenntzeichnet, daß der Youla-Parameter in Form eines Filters mit unendlicher Impulsantwort vorliegt und daß während einer vorangehenden Konzeptionsphase einerseits Parameter eines Modells des Teils des materiellen Systems, der das (bzw. die) Betätigungsorgan(e), den (die) Sockel und den (die) Sensor(en) aufweist, durch Anregung des (der) Betätigungsorgan(e) und Messung durch den (die) Sensor(en) und andererseits die Korrektursteuerungsregel in Abhängigkeit von bestimmten Schwingungsstörungsfrequenzen bestimmt und berechnet werden und daß in einem Speicher des Rechners, vorzugsweise in einer Tabelle, wenigstens die variablen Koeffizienten des Youla-Parameters gespeichert werden und daß während einer Benutzungsphase in Echtzeit

- die Frequenz der aktuellen Schwingungsstörung bestimmt wird und
- mit dem Rechner die Korrektursteuerungsregel berechnet wird, die den zentralen Korrektor mit dem Youla-Parameter enthält, wobei für den Youla-Parameter die gespeicherten Koeffizienten einer bestimmten Störungsfrequenz verwendet werden, die der aktuellen Störungsfrequenz entsprechen.

2. Verfahren gemäß Anspruch 1, **dadurch gekennzeichnet, daß** im monovariablen Fall in der Konzeptionsphase :

a) - in einem ersten Schritt ein lineares Modell des materiellen Systems in Form einer rationellen diskreten Transferfunktion verwendet wird und die Transferfunktion durch Anregung des materiellen Systems durch das oder die Betätigungsorgane und Messungen durch den Sensor und anschließende Anwendung eines Verfahrens zur Identifizierung des linearen Systems mit den Messungen und dem Modell bestimmt und berechnet wird,

b) - in einem zweiten Schritt ein zentraler Korrektor eingesetzt wird, der auf das im ersten Schritt bestimmte und berechnete Modell des materiellen Systems angewendet wird, wobei der zentrale Korrektor in Form eines RS-Korrektors aus zwei Blöcken $1/S_o(q^{-1})$ und $R_o(q^{-1})$ vorliegt, wobei im zentralen Korrektor der Block $1/S_o(q^{-1})$ das Signal u(t) erzeugt und am Eingang das invertierte Ausgangssignal des Blocks $R_o(q^{-1})$ empfängt, während der Block $R_o(q^{-1})$ am Eingang das entsprechende Signal y(t) empfängt, das der Summe aus der Schwingungsstörung p(t) und dem Ausgang der Transferfunktion des Modells des materiellen Systems entspricht, und der zentrale Korrektor bestimmt und berechnet wird,

c) - in einem dritten Schritt dem zentralen Korrektor ein Youla-Parameter beigegeben wird, um die Korrektursteuerungsregel zu bilden, wobei der Youla-Parameter in Form eines Blocks Q(q⁻¹), ein Filter mit unendlicher

Impulsantwort, mit $Q(q^{-1}) = \dfrac{\beta(q^{-1})}{\alpha(q^{-1})}$ vorliegt, wobei $\alpha$, $\beta$ dem zentralen Korrektor RS beigegebene Polynome mit q⁻¹ sind, wobei der Youla-Block Q(q⁻¹) eine durch eine Berechnung aus den Signalen u(t) und U(t) und in Abhängigkeit von der Transferfunktion des materiellen Systems erhaltene Störungsschätzung empfängt und das Signal am Ausgang des Youla-Blocks Q(q⁻¹) vom invertierten Signal von $R_o(q^{-1})$, das zum Eingang des Blocks $1/S_o(q^{-1})$ des zentralen Korrektors RS gesendet wird, abgezogen wird, und der Youla-Parameter in der Korrektursteuerungsregel, die den zentralen Korrektor enthält, dem der Youla-Parameter für wenigstens eine Frequenz der Schwingungsstörung p(t), darunter wenigstens die bestimmte Frequenz der zu dämpfenden Schwingungsstörung, zugeordnet ist, bestimmt und berechnet wird,

und daß in der Verwendungsphase in Echtzeit :

- die aktuelle Frequenz der zu dämpfenden Schwingungsstörung bestimmt wird und
- mit dem Rechner die Korrektursteuerungsregel berechnet wird, die den zentralen Korrektor RS mit dem Youla-Parameter enthält, wobei für den Youla-Parameter die Koeffizienten verwendet werden, die für eine Schwingungsstörungsfrequenz berechnet worden sind, die der aktuellen Frequenz der zu dämpfenden Schwingungsstörung entspricht, wobei die Koeffizienten von $R_o(q^{-1})$ und $S_o(q^{-1})$ fest sind.

3. Verfahren gemäß Anspruch 2, **dadurch gekennzeichnet, daß** in der Konzeptionsphase folgende Maßnahmen durchgeführt werden:

a) - im ersten Schritt wird das materielle System angeregt, indem an das (die) Betätigungsorgan(e) ein Anregungssignal angelegt wird, dessen Spektraldichte über einen verwendbaren Frequenzbereich im Wesentlichen gleichförmig ist,

b) - im zweiten Schritt werden die Polynome $R_o(q^{-1})$ und $S_o(q^{-1})$ des zentralen Korrektors derart bestimmt und berechnet, daß der zentrale Korrektor mit einem Korrektor äquivalent ist, der durch Setzen der Pole der geschlossenen Schleife in der Anwendung des zentralen Korrektors in die Transferfunktion des Modells des materiellen Systems berechnet worden ist,

c) - im dritten Schritt werden Zähler und Nenner des Youla-Blocks $Q(q^{-1})$ in der Korrektursteuerungsregel für wenigstens eine Frequenz der Schwingungsstörung p(t), darunter wenigstens die bestimmte Frequenz der zu dämpfenden Schwingungsstörung, bestimmt und berechnet, und zwar in Abhängigkeit von einem Dämpfungskriterium, wobei der Block $Q(q^{-1})$ in Form eines Verhältnisses $\beta(q^{-1})/\alpha(q^{-1})$ ausgedrückt wird, wobei $\alpha$, $\beta$ Polynome mit $q^{-1}$ sind, um für die bzw. jede der Frequenzen Werte der Koeffizienten der Polynome $\alpha(q^{-1})$ und $\beta(q^{-1})$ zu erhalten, wobei die Berechnung von $\beta(q^{-1})$ und $\alpha(q^{-1})$ durch Erhalten einer diskreten Transferfunktion $Hs(q^{-1})/\alpha(q^{-1})$ erfolgt, die aus der Diskretisierung einer Zelle der zweiten durchgehenden Ordnung resultiert, wobei das Polynom $\beta(q^{-1})$ durch Lösen einer Bezout-Gleichung berechnet wird, und daß in der Verwendungsphase in Echtzeit folgende Maßnahmen durchgeführt werden :

- die aktuelle Frequenz der zu dämpfenden Schwingungsstörung wird bestimmt und
- die Korrektursteuerungsregel wird mit dem Rechner berechnet, mit dem zentralen Korrektor mit festen Koeffizienten und dem Youla-Parameter mit variablen Koeffizienten, um das dem (den) Betätigungsorgan(en) übermittelte Signal u(t) in Abhängigkeit von den Messungen y(t) des Sensors und unter Verwendung der für eine bestimmte Frequenz, die der aktuellen Frequenz entspricht, bestimmten und berechneten Werte der Koeffizienten der Polynome $\alpha(q^{-1})$ und $\beta(q^{-1})$ für den Youla-Block $Q(q^{-1})$ zu erzeugen.

4. Verfahren gemäß Anspruch 2 oder 3, dadurch gekenntzeichnet, daß für das Modell des materiellen Systems eine Transferfunktion der Form

$$\frac{y(t)}{u(t)} = \frac{q^{-d}B(q^{-1})}{A(q^{-1})}$$

verwendet wird,
wobei d die Zahl der Abtastperioden der Verzögerung des Systems und B und A Polynome mit $q^{-1}$ sind, die die Form

$$B(q^{-1}) = b_0 + b_1 \cdot q^{-1} + \dots b_{nb} \cdot q^{-nb}$$

$$A(q^{-1}) = 1 + a_1 \cdot q^{-1} + \dots b_{na} \cdot q^{-na}$$

haben,
wobei $b_i$ und $a_i$ Skalare sind und $q^{-1}$ der Verzögerungsoperator einer Abtastperiode ist, und daß die Berechnung der Abschätzung der Schwingungsstörung durch Anwendung der Funktion $q^{-d}B(q^{-1})$ auf u(t) und Abziehen des Resultats von der Anwendung von y(t) auf die Funktion $A(q^{-1})$ erhalten wird.

5. Verfahren gemäß Anspruch 2, 3 oder 4, **dadurch gekennzeichnet, daß** die Polynome $R_o(q^{-1})$ und $S_o(q^{-1})$ des zentralen Korrektors für den Schritt b) durch ein Verfahren des Setzens der Pole der geschlossenen Schleife bestimmt und berechnet werden.

6. Verfahren gemäß Anspruch 1, **dadurch gekennzeichnet, daß** im monovariablen und im multivariablen Fall in der Konzeptionsphase :

a) - in einem ersten Schritt ein lineares Modell des materiellen Systems in Form einer Zustandsdarstellung von Matrizenblöcken H, W, G und q$^{-1}$, I verwendet wird, wobei G eine Übergangsmatrize, H eine Eingangsmatrize, W eine Ausgangsmatrize und I die Identitätsmatrize sind, wobei die Zustandsdarstellung durch eine Iterationsgleichung ausgedrückt werden kann :

$$X(t+T_e) = G{\cdot}X(t) + H{\cdot}U(t)$$

$$Y(t) = W{\cdot}X(t)$$

wobei $X(t)$ Zustandsvektor, $U(t)$ Vektor der Eingänge, $Y(t)$ Vektor der Ausgänge sind,
und das Modell des materiellen Systems durch Anregung des materiellen Systems durch das (die) Betätigungsorgan(e) und Messungen durch die Sensoren und Anwendung eines Verfahrens zur Identifizierung des linearen Systems mit den Messungen und dem Modell bestimmt und berechnet wird,
b) - in einem zweiten Schritt ein zentraler Korrektor verwendet wird, der auf das im ersten Schritt bestimmte und berechnete Modell des materiellen Systems angewendet wird, wobei der zentrale Korrektor in Form eines Zustandsbeobachters und eines geschätzten Zustandsrücklaufs vorliegt, der mit $^X$ einen Zustandsvektor des Beobachters iterativ in Abhängigkeit von $Kf$, einem Gewinn des Beobachters, $Kc$, einem Rücklaufvektor für den geschätzten Zustand, und vom im ersten Schritt bestimmten und berechneten Modell des materiellen Systems ausdrückt, d.h.

$$^X(t+Te) = (G - Kf{\cdot}W){\cdot}\ ^X(t+Te) + H{\cdot}U(k) + Kf{\cdot}(Y(t+Te))$$

mit einer Steuerung $U(t) = -Kc{\cdot}^X(t)$,
und der zentrale Korrektor bestimmt und berechnet wird,
c) - in einem dritten Schritt dem zentralen Korrektor ein Youla-Parameter beigegeben wird, um die Korrektursteuerungsregel zu bilden, wobei der Youla-Parameter in Form eines mono- oder multivariablen Blocks Q mit Zustandsmatrizen $A_Q$, $B_Q$, $C_Q$ vorliegt, die dem ebenfalls in Form einer Zustandsdarstellung ausgedrückten zentralen Korrektor beigeordnet sind, wobei der Block Q, dessen Ausgang vom Ausgang des zentralen Korrektors abgezogen wird, das Signal U(t) erzeugt und dessen Eingang das Signal Y(t) empfängt, von dem das Signal $W{\cdot}^X(t)$ abgezogen ist, und der Youla-Parameter in der Korrektursteuerungsregel, die den zentralen Korrektor enthält, dem der Youla-Parameter für wenigstens eine Frequenz der Schwingungsstörung p(t), darunter wenigstens die bestimmte Frequenz der zu dämpfenden Schwingungsstörung, zugeordnet ist, bestimmt und berechnet wird,

und daß in der Verwendungsphase in Echtzeit:

- die aktuelle Frequenz der zu dämpfenden Schwingungsstörung bestimmt wird und
- mit dem Rechner die Korrektursteuerungsregel berechnet wird, die den zentralen Korrektor mit festen Koeffizienten und dem Youla-Parameter mit variablen Koeffizienten enthält, wobei für den Youla-Parameter die Koeffizienten verwendet werden, die für eine Schwingungsstörungsfrequenz berechnet worden sind, die der aktuellen Frequenz der zu dämpfenden Schwingungsstörung entspricht.

7. Verfahren gemäß Anspruch 6, **dadurch gekennzeichnet, daß** in der Konzeptionsphase folgende Maßnahmen durchgeführt werden:

a) - im ersten Schritt wird das materielle System angeregt, indem an die Betätigungsorgane ein Anregungssignal angelegt wird, dessen Spektraldichte über einen verwendbaren Frequenzbereich im Wesentlichen gleichförmig ist, wobei die Anregungssignale untereinander dekorreliert sind,
b) - im zweiten Schritt wird der zentrale Korrektor derart bestimmt und berechnet, daß er mit einem Korrektor mit Zustandsbeobachter und Zustandsrücklauf äquivalent ist, wobei $Kf$ durch quadratische Optimierung (LQ) erhalten wird und der Gewinn des Zustandsrücklaufs $Kc$ derart ausgewählt wird, daß die Robustheit der mit dem Youla-Parameter versehenen Steuerungsregel mittels einer quadratischen Optimierung (LQ) sichergestellt wird,
c) - im dritten Schritt werden die Koeffizienten des Youla-Blocks Q in der Korrektursteuerungsregel für wenigstens eine Frequenz einer Schwingungsstörung P(t), darunter wenigstens die bestimmte Frequenz der zu dämpfenden Schwingungsstörung, in Abhängigkeit von einem Dämpfungskriterium bestimmt und berechnet, um Werte der Koeffizienten des Youla-Parameters für die bzw. jede der Frequenzen zu erhalten,

und daß in der Verwendungsphase in Echtzeit folgende Maßnahmen durchgeführt werden :

- die aktuelle Frequenz der zu dämpfenden Schwingungsstörung wird bestimmt und
- die Korrektursteuerungsregel wird mit dem Rechner berechnet, mit dem zentralen Korrektor mit festen Koeffizienten und dem Youla-Parameter mit variablen Koeffizienten, um das dem (den) Betätigungsorgan(en) übermittelte Signal U(t) in Abhängigkeit von den Messungen Y(t) der Sensoren und unter Verwendung, für den Youla-Parameter, der für eine bestimmte Frequenz, die der aktuellen Frequenz entspricht, bestimmten und berechneten Werte der Koeffizienten zu erzeugen.

8. Verfahren gemäß einem der Ansprüche 2 bis 7, **dadurch gekennzeichnet, daß** es an eine Gesamtheit bestimmter Frequenzen von zu dämpfenden Schwingungsstörungen angepaßt ist und daß der Schritt c) für jede der bestimmten Frequenzen wiederholt wird, und daß in der Verwendungsphase, wenn keine der bestimmten Frequenzen der aktuellen Frequenz der zu dämpfenden Schwingungsstörung entspricht, von den bekannten Werten der Koeffizienten des Youla-Blocks Q für die bestimmten Frequenzen ausgehend, eine Interpolation bei der aktuellen Frequenz für die Werte der Koeffizienten des Youla-Blocks Q durchgeführt wird.

9. Verfahren gemäß einem der Ansprüche 2 bis 8, **dadurch gekennzeichnet, daß** die Signale mit einer Frequenz Fe abgetastet werden und daß im Schritt a) ein verwendbares Frequenzband des Anregungssignals verwendet wird, das im Wesentlichen [0, Fe/2] ist.

10. Verfahren gemäß einem der Ansprüche 2 bis 9, **dadurch gekennzeichnet, daß** der Konzeptionsphase vor der Verwendungsphase ein vierter Schritt d) der Überprüfung der Stabilität und der Robustheit des Modells des materiellen Systems und der Korrektursteuerungsregel, zentraler Korrektor mit Youla-Parameter, die zuvor in den Schritten a) bis c) durch eine Simulation der in den Schritten b) und c) erhaltenen Korrektursteuerungsregel, angewendet auf das im Schritt a) für die bestimmte(n) Frequenz(en) erhaltene Modells des materiellen Systems, erhalten worden sind, angefügt wird und daß, wenn ein vorbestimmtes Kriterium der Stabilität und/oder der Robustheit nicht eingehalten wird, wenigstens der Schritt c) unter Änderung des Dämpfungskriteriums wiederholt wird.

11. Verfahren gemäß einem der vorangehenden Ansprüche, **dadurch gekennzeichnet, daß** die Konzeptionsphase eine vorangehende Phase ist und daß sie vor der Verwendungsphase einmal mit Einspeicherung der Ergebnisse der Bestimmungen und Berechnungen für eine Verwendung in der Verwendungsphase durchgeführt wird.

12. Verfahren gemäß einem der vorangehenden Ansprüche, dadurch gekenntzeichnet, daß die aktuelle Frequenz der zu dämpfenden Schwingungsstörung von einer Messung der Drehgeschwindigkeit der drehenden Maschine ausgehend bestimmt wird.

13. Verfahren gemäß einem der vorangehenden Ansprüche, **dadurch gekennzeichnet, daß** das materielle System ein Luftfahrzeug ist und die drehende Maschine ein Luftfahrzeugmotor ist.

14. Vorrichtung, die Mittel zur aktiven Steuerung von mechanischen Schwingungen mittels Implementierung einer Steuerung aus einem zentralen Korrektor und einem Youla-Parameter in einem Rechner der besagten Vorrichtung aufweist, die eine Durchführung des Verfahrens gemäß einem der vorangehenden Ansprüche zur Dämpfung mechanischer, im Wesentlichen monofrequenter Störungsschwingungen, die in einer materiellen Struktur eines materiellen Systems durch wenigstens eine drehende, mittels eines Sockels an der materiellen Struktur befestigte und mit einer bestimmbaren Drehgeschwindigkeit drehende Maschine erzeugt werden, ermöglicht, wobei die Frequenz der Schwingungsstörung mit der Drehgeschwindigkeit der drehenden Maschine zusammenhängt und sich in Abhängigkeit von den Änderungen der Drehgeschwindigkeit ändert, wobei die Vorrichtung außerdem wenigstens ein mechanisches, zwischen der drehenden Maschine und der materiellen Struktur angeordnetes Betätigungsorgan und wenigstens einen je nach monovariablem oder multivariablem Fall Signale y(t) oder Y(t) erzeugenden Schwingungssensor aufweiset, wobei die Verwendung eines Sensors einem monovariablem Fall entspricht und die Verwendung mehrerer Sensoren einem multivariablem Fall entspricht, wobei der (oder die) Sensor(en) im Sockel in Reihe oder parallel zum Sockel sein kann (können), wobei der (oder die) Sensor(en) an einen oder mehrere das (bzw. die) Betätigungsorgan(e) steuernde Rechner angeschlossen ist (sind), wobei der Rechner Mittel zum Berechnen einer Korrektur aufweist, die für das (die) Betätigungsorgan(e) je nach monovariablem oder multivariablem Fall Steuersignale u(t) oder U(t) in Abhängigkeit von Messungen des Sensors bzw. der Sensoren einerseits und eines Schwingungsstörungsfrequenzparameters andererseits erzeugen, wobei der Rechner gemäß einer Korrektursteuerungsregel ausgebildete Rechenmittel aufweist, die einem Blockmodell des Systems entspricht, wobei die Blöcke einerseits jene des zentralen Korrektors und andererseits ein Youla-Parameterblock sind, wobei das Modell derart ausgelegt ist, daß in der Korrektursteuerungsregel nur der Youla-Parameter von der Schwingungsstörungsfrequenz abhängige Koeffizienten aufweist, während der zentrale Korrektor feste Koeffizienten aufweist, wobei der Youla-Parameter in Form eines Filters mit unendlicher Impulsantwort vorliegt, wobei während einer vorangehenden Konzeptionsphase einerseits Parameter eines Modells des Teils des materiellen Systems, der das (bzw. die) Betätigungsorgan(e), den (die) Sockel und den (die) Sensor(en) aufweist, durch Anregung des (der) Betätigungsorgan(e) und Messung durch den (die) Sensor(en) und andererseits die Korrektursteuerungsregel in Abhängigkeit von bestimmten Schwingungsstörungsfrequenzen bestimmt und berechnet worden sind und in einem Speicher des Rechners, vorzugsweise in einer Tabelle, wenigstens die variablen Koeffizienten des Youla-Parameters gespeichert werden und wobei die Vorrichtung während einer Benutzungsphase in Echtzeit die Bestimmung der aktuellen Schwingungsstörung und die Berechnung der Korrektursteuerungsregel, die den zentralen Korrektor mit dem Youla-Parameter enthält, mit dem Rechner ermöglicht, wobei für den Youla-Parameter die gespeicherten Koeffizienten einer bestimmten Störungsfrequenz verwendet werden, die der aktuellen Störungsfrequenz entsprechen.

**15.** Vorrichtung gemäß Anspruch 14, **dadurch gekennzeichnet, daß** der Rechner während der vorangehenden Konzeptionsphase außerdem die Bestimmung und die Berechnung der Parameter des Modells und der Korrektursteuerungsregel ermöglicht.

## Claims

**1.** A method for active control of mechanical vibrations by implementation of a control law consisted of a central corrector and a Youla parameter for the attenuation of essentially mono-frequency mechanical vibratory perturbations created in a physical structure (5) of a physical system by at least one rotary machine (1) fixed by a support (2) to said physical structure and rotating at a determinable speed of rotation, the frequency of the vibratory perturbation being linked to the speed of rotation of the rotary machine and varying as a function of the variations of said speed of rotation, at least one mechanical actuator (3) being arranged between the rotary machine and the physical structure, as well as at least one vibration sensor (4) producing signals y(t) or Y(t) according to a mono-variable or multi-variable case, respectively, the use of one sensor corresponding to a mono-variable case and the use of several sensors corresponding to a multi-variable case, wherein the actuator(s) can be in series, in the support, or in parallel with the support, the sensor(s) being connected to at least one calculator controlling the actuator(s), the calculator including correction calculation means producing control signals u(t) or U(t) according to a mono-variable or multi-variable case, respectively, for the actuator(s) as a function, on the one hand, of measurements of the sensor(s), and on the other hand, of a vibratory perturbation frequency parameter, the calculation means being configured according to a correction control law corresponding to a block-modeling of the system, said blocks being, on the one hand, those of the central corrector, and on the other hand, a Youla parameter block, the modeling being such that only the Youla parameter has coefficients that depend on the vibratory perturbation frequency in said correction control law, the central corrector having fixed coefficients, **characterized in that** the Youla parameter is in the form of an infinite impulse response filter,
and during a preliminary design phase, are determined and calculated, on the one hand, the model parameters of the physical system part that includes the actuator(s), support(s) and sensor(s) by stimulation of the actuator(s) and measurements by the sensor(s), and on the other hand, the correction control law as a function of determined frequencies of vibratory perturbations, and at least the variable coefficients of the Youla parameters are stored in a memory of the calculator, preferably in a table,
and during a use phase, in real time:

- the frequency of the current vibratory perturbation is determined,
- the correction control law is calculated, comprising the central corrector with the Youla parameter, with the calculator using as the Youla parameter the memorized coefficients of a determined perturbation frequency corresponding to the current perturbation frequency.

**2.** The method according to claim 1, **characterized in that**, in the mono-variable case, in the design phase:

a) - in a first time, a linear model of the physical system is used, which is in the form of a discrete rational transfer function, and said transfer function is determined and calculated by stimulation of the physical system by the actuator(s) and measurements by the sensor, then application of a linear system identification method with the measures and the model,

b) - in a second time, a central corrector is implemented, which is applied to the model of the physical system determined and calculated at the first time, the central corrector being in the form of a RS corrector of two blocks $1/So(q^{-1})$ and $Ro(q^{-1})$, in the central corrector, the block $1/So(q^{-1})$ producing the signal u(t) and receiving as an input the reverse output signal of the block $Ro(q^{-1})$, said block $Ro(q^{-1})$ receiving as an input the signal y(t) corresponding to the summation of the vibratory perturbation p(t) and of the output of the transfer function of the physical system model, and the central corrector is determined and calculated,

c) - in a third time, a Youla parameter is added to the central corrector to form the correction control law, the Youla parameter being in the form of a block $Q(q^{-1})$, an infinite impulse response filter, with $Q(q^{-1}) = \dfrac{\beta(q^{-1})}{\alpha(q^{-1})}$,

$\alpha$ and $\beta$ being polynomials in $q^{-1}$, added to the central corrector RS, said Youla block $Q(q^{-1})$ receiving a perturbation estimation obtained by calculation from signals u(t) and y(t) and as a function of the transfer function of the physical system model and the output signal of said Youla block $Q(q^{-1})$ being subtracted from the reverse signal of $Ro(q^{-1})$ sent at the input of the block $1/So(q^{-1})$ of the central corrector RS, and then is determined and calculated the Youla parameter in the correction control law, including the central corrector to which the Youla parameter is associated, for at least one vibratory perturbation frequency p(t), including at least the determined frequency of the vibratory perturbation to be attenuated,

and **in that**, in the use phase, in real time:

- the current frequency of the vibratory perturbation to be attenuated is determined,
- the calculator is caused to calculate the correction control law, comprising the RS corrector with the Youla parameter, using as the Youla parameter the coefficients that have been calculated for a vibratory perturbation frequency corresponding to the current frequency of vibratory perturbation to be attenuated, the coefficients of $Ro(q^{-1})$ and $So(q^{-1})$ being fixed.

3. The method according to claim 2, **characterized in that**, in the design phase, the following operations are performed:

a) - in a first time, the physical system is excited by application to the actuator(s) of an excitation signal, whose spectral density is substantially uniform over a useful frequency band,

b) - in a second time, the polynomials $Ro(q^{-1})$ and $So(q^{-1})$ of the central corrector are determined and calculated so that said central corrector is equivalent to a corrector calculated by placement of the poles of the closed loop in the application of the central corrector to the transfer function of the physical system model,

c) - in the third time, are determined and calculated the numerator and denominator of the Youla block $Q(q^{-1})$ within the correction control law, for at least one vibratory perturbation frequency p(t), including at least the determined frequency of vibratory perturbation to be attenuated, and that as a function of a criterion of attenuation, the block $Q(q^{-1})$ being expressed in the form of a ratio $\beta(q^{-1})/\alpha(q^{-1})$, $\alpha$ and $\beta$ being polynomials in $q^{-1}$, so as to obtain coefficient values of the polynomials $\alpha(q^{-1})$ and $\beta(q^{-1})$ for the/each of the frequencies, the calculation of $\beta(q^{-1})$ and $\alpha(q^{-1})$ being made by obtaining a discrete transfer function $Hs(q^{-1})/\alpha(q^{-1})$ resulting from the discretization of a continuous second order cell, the polynomial $\beta(q^{-1})$ being calculated by solving a Bezout equation,

and **in that**, in the use phase, in real time, the following operations are performed:

- the current frequency of the vibratory perturbation to be attenuated is determined,
- the calculator is caused to calculate the correction control law, fixed-coefficient central corrector with variable-coefficient Youla parameter, to produce the signal u(t) sent to the actuator(s), as a function of the measures y(t) of the sensor and using as the Youla block $Q(q^{-1})$ the coefficient values of the polynomials $\alpha(q^{-1})$ and $\beta(q^{-1})$ determined and calculated for a determined frequency corresponding to the current frequency.

4. The method according to claim 2 or 3, **characterized in that**, as the physical system model, a transfer function is used, which is in the form of:

$$\frac{y(t)}{u(t)} = \frac{q^{-d} B(q^{-1})}{A(q^{-1})}$$

where d is the number of system delay sampling periods, B and A are polynomials in $q^{-1}$ of the form:

$$B(q^{-1}) = b_0 + b_1 \cdot q^{-1} + \cdots b_{nb} \cdot q^{-nb}$$

$$A(q^{-1}) = 1 + a_1 \cdot q^{-1} + \cdots a_{na} \cdot q^{-na}$$

the $b_i$ and $a_i$ being scalar numbers, and $q^{-1}$ being the delay operator of a sampling period, and the calculation of the vibratory perturbation estimation is obtained by application of the function $q^{-d}B(q^{-1})$ to u(t) and subtraction of result from the application of y(t) to the function $A(q^{-1})$.

5. The method according to claim 2, 3 or 4, **characterized in that**, for the time b), the polynomials $Ro(q^{-1})$ and $So(q^{-1})$ of the central corrector are determined and calculated by a method of placement of the closed loop poles.

6. The method according to claim 1, **characterized in that**, in the mono- and multi-variable case, in the design phase:

a) - in a first time, a linear model of the physical system is used, which is in the form of a state representation of matrix blocks H, W, G and $q^{-1}.I$, G being a transition matrix, H being an input matrix, W being an output matrix and I the identity matrix, wherein said state representation can be expressed by a recurrence equation:

$$X(t + Te) = G \cdot X(t) + H \cdot U(t)$$

$$Y(t) = W \cdot X(t)$$

with $X(t)$: state vector, $U(t)$: input vector, $Y(t)$: output vector,
and said physical system model is determined and calculated by stimulation of the physical system by the actuator(s) and measurements by the sensors, then application of a linear system identification method with the measures and the model,
b) - in a second time, a central corrector is implemented, which is applied to the physical system model determined and calculated at the first time, the central corrector being in the form of state observer and estimated state feedback that expresses iteratively $\hat{X}$, a state vector of the observer, as a function of $Kf$, a gain of the observer, $Kc$ a vector of the estimated state feedback, as well as the physical system model determined and calculated at the first time, i.e.:

$$\hat{X}(t + Te) = (G - Kf \cdot W) \cdot \hat{X}(t + Te) + H \cdot U(k) + Kf \cdot (Y(t + Te))$$

with a control $U(t) = -Kc \cdot \hat{X}(t)$,
and said central corrector is determined and calculated,
c) - in a third time, a Youla parameter is added to the central corrector to form the correction control law, the Youla parameter being in the form of a mono- or multi-variable block Q, of state matrices $A_Q$, $B_Q$, $C_Q$, added to the central corrector also expressed in a state representation form, block Q whose output subtracted from the output of the central corrector produces the signal U(t) and whose input receives the signal Y(t) from which is subtracted the signal $W \cdot \hat{X}(t)$, and then is determined and calculated the Youla parameter in the correction control law, including the central corrector to which the Youla parameter is associated, for at least one vibratory perturbation frequency P(t), including at least the determined frequency of vibratory perturbation to be attenuated,

and **in that**, in the use phase, in real time:

- the current frequency of the vibratory perturbation to be attenuated is determined,
- the calculator is caused to calculate the correction control law, including the fixed-coefficient central corrector with the variable-coefficient Youla parameter, using as the Youla parameter the coefficients that have been calculated for a vibratory perturbation frequency corresponding to the current frequency of vibratory perturbation to be attenuated.

7. The method according to claim 6, **characterized in that**, in the design phase, the following operations are made:

a) - in the first time, the physical system is excited by application to the actuators of excitation signals, whose spectral density is substantially uniform over a useful frequency band, the excitation signals being decorrelated with respect to each other,

b) - in the second time, the central corrector is determined and calculated so as to be equivalent to a corrector with state observer and state feedback, *Kf* being obtained by quadratic optimization (LQ), and the state feedback gain *Kc* chosen so as to ensure the robustness of the control law provided with the Youla parameter, by means of a quadratic optimization (LQ),

c) - in the third time, are determined and calculated the coefficients of the Youla block Q within the correction control law, for at least one vibratory perturbation frequency P(t), including at least the determined frequency of vibratory perturbation to be attenuated as a function of a criterion of attenuation, so as to obtain coefficient values of the Youla parameter for the/each of the frequencies,

and **in that**, in the use phase, in real time, the following operations are performed:

- the current frequency of the vibratory perturbation to be attenuated is determined,
- the calculator is caused to calculate the correction control law, fixed-coefficient central corrector with variable-coefficient Youla parameter, to produce the signal U(t) sent to the actuators, as a function of the measures Y(t) of the sensors and using as the Youla parameter the coefficient values determined and calculated for a determined frequency corresponding to the current frequency.

8. The method according to any one of claims 2 to 7, **characterized in that** it is adapted to a set of determined frequencies of vibratory perturbations to be attenuated, and the time c) is repeated for each of the determined frequencies and **in that**, in use phase, when no one of the determined frequencies corresponds to the current frequency of vibratory perturbation to be attenuated, an interpolation is made at said current frequency, for the coefficient values of the Youla block Q, based on the values of coefficients of said Youla block Q known for the determined frequencies.

9. The method according to any one of claims 2 to 8, **characterized in that** the signals are sampled at a frequency Fe and, at time a), a useful frequency band of the excitation signal is used, which is substantially [0, Fe/2].

10. The method according to any one of claims 2 to 9, **characterized in that** before the use phase, at the design phase, it is added a fourth time d) of verification of the stability and robustness of the physical system model and of the correction control law, central corrector with Youla parameter, previously obtained at times a) to c), by making a simulation of the correction control law obtained at times b) and c), applied to the physical system model obtained at time a), for the determined frequency(ies) and when a predetermined criterion of stability and/or robustness is not fulfilled, at least the time c) is reiterated with modification of the criterion of attenuation.

11. The method according to any one of the preceding claims, **characterized in that** the design phase is a preliminary phase and is performed once, preliminary to the use phase, with memorization of the determination and calculation results for being used in the use phase.

12. The method according to any one of the preceding claims, **characterized in that** the current frequency of the vibratory perturbation to be attenuated is determined from the measure of the speed of rotation of the rotary machine.

13. The method according to any one of the preceding claims, **characterized in that** the physical system is an aircraft and the rotary machine is an aircraft engine.

14. A device including means for active control of mechanical vibrations by implementation of a control law consisted of a central corrector and a Youla parameter for the implementation of the method according to any one of the preceding claims for attenuation of essentially mono-frequency mechanical vibratory perturbations created in a physical structure of a physical system by at least one rotary machine fixed by a support to said physical structure and rotating at a determinable speed of rotation, the frequency of the vibratory perturbation being linked to the speed of rotation of the rotary machine and varying as a function of the variations of said speed of rotation, the device further including at least one mechanical actuator arranged between the rotary machine and the physical structure, as well as at least one vibration sensor producing signals y(t) or Y(t) according to a mono-variable or multi-variable case, respectively, the use of one sensor corresponding to a mono-variable case and the use of several sensors corresponding to a multi-variable case, wherein the actuator(s) can be in series, in the support, or in parallel with the support, the sensor(s) being connected to at least one calculator of the device controlling the actuator(s), the calculator including correction calculation means producing control signal u(t) or U(t) according to a mono-variable or multi-variable case, respectively, for the actuator(s) as a function, on the one hand, of measurements of the sensor(s), and on the other hand, of a vibratory perturbation frequency parameter, the calculator including calculation means configured according to a correction control law corresponding to a block-modeling of the system, said blocks being, on the one hand, those of the central corrector, and on the other hand, a Youla parameter block, the modeling being such that only the Youla parameter has coefficients that depend on the vibratory perturbation frequency in said correction control law, the central corrector having fixed coefficients, the Youla parameter being in the form of an infinite impulse response filter, during a preliminary design phase, having been determined and calculated, on the one hand, the model parameters of the physical system part that includes the actuator(s), support(s) and sensor(s) by stimulation of the actuator(s) and measurements by the sensor(s), and on the other hand, the correction control law as a function of the determined frequencies of vibratory perturbations, and at least the variable coefficients of the Youla parameters are stored in a memory of the calculator, preferably in a table, the device allowing, during a use phase, in real time, the determination of the frequency of the current vibratory perturbation and the calculation of the correction control law, including the central corrector with the Youla parameter, with the calculator using as the Youla parameter the memorized coefficients of a determined perturbation frequency corresponding to the current perturbation frequency.

15. Device according to claim 14, **characterized in that** the calculator further allows, during the preliminary design phase, the determination and calculation of the model parameters and the correction control law.

montage série

FIGURE 1

montage parallèle

FIGURE 2

FIGURE 3

FIGURE 4

FIGURE 5

FIGURE 6

Ensemble
(électro)mécanique

Loi de commande

FIGURE 7

Fréquence vibrations
(issue de la vitesse
de rotation)

FIGURE 9

FIGURE 10

FIGURE 11

FIGURE 12

FIGURE 13

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **SOPHIE GLÉVAREC ; BERNARD VAU.** Atténuation des ondulations de couple sur simulateurs de mouvements. *Conférence Mécatronique, SupMéca,* 15 Décembre 2009
- **S-J. ELIOTT.** Signal processing for active control. Academic Press, 2001
- **I.D. LANDAU.** *Commande des systèmes,* 2002
- **LANDAU.** Adaptive narrow disturbance applied to an active suspension - an internal model approach. *Automatica,* 2005

- **PHILIPPE DE LARMINAT.** Automatique appliquée. Hermès, 2009
- **LOAN DORÉ LANDAU.** Commande des systèmes. Hermès, 2002
- **BRIAN D.O. ANDERSON.** From Youla-Kucera to identification, adaptive and nonlinear control. *Automatica,* 1998
- **B.A FRANCIS ; W.M. WONHAM.** The internal model principle for linear multivariate regulators. *Applied mathematics and optimization,* vol. 2 (2